# EUROPEAN PATENT APPLICATION

(11) **EP 4 683 294 A1**
(43) Date of publication of application: **21.01.2026**
(21) Application number: 24770546.0
(22) Date of filing: 29.02.2024
(51) Int. Cl.: H04L 47/2416, H04L 43/0864, H04W 28/16, H04W 56/00, H04W 88/18

(54) **INFORMATION PROCESSING DEVICE, TERMINAL DEVICE, BASE STATION, COMMUNICATION SYSTEM, INFORMATION PROCESSING METHOD, AND COMMUNICATION METHOD**

(30) Priority: 16.03.2023 JP 2023041782
(71) Applicant: Sony Group Corporation, Tokyo 108-0075 (JP)
(72) Inventor: TAKANO, Hiroaki, Tokyo 108-0075 (JP)
(74) Representative: Witte, Weller & Partner Patentanwälte mbB
(86) International application number: PCT/JP2024/007477
(87) International publication number: WO 2024/190435

(57) **Abstract**

An information processing device includes a control unit. The control unit adds a delay to a signal to be transmitted to a first terminal device and/or an application device according to a difference between first and second RAN delay characteristics and/or a difference between first and second NW delay characteristics. The first RAN delay characteristic is a delay characteristic of a section including a first (R)AN in a first communication path including the first terminal device, the first (R)AN, a first CN, and the application device. The second RAN delay characteristic is a delay characteristic of a section including at least a second (R)AN in a second communication path including a second terminal device, the second (R)AN, a second CN, and the application device. The first NW delay characteristic is a delay characteristic of a section including at least a part of a path excluding the first (R)AN in the first communication path. The second NW delay characteristic is a delay characteristic of a section including at least a part of a path excluding the second (R)AN in the second communication path.

## Description

### Field

The present disclosure relates to an information processing device, a terminal device, a base station, a communication system, an information processing method, and a communication method.

### Background

In recent years, a technology called Time-Sensitive Network (TSN) has attracted attention. The TSN is a network that places importance on a time from when a packet is transmitted to when the packet is received. In recent years, application of TSN to a 5G network has been studied.

For example, a technology for supporting implementation of a TSN by providing delay information of a UE or the like to a network is known.

### Citation List

### Patent Literature

Patent Literature 1: JP 2022-519604 A

### Summary

### Technical Problem

For example, an application that simultaneously provides services to a plurality of terminal devices, such as a network game, using TSN can be considered. As described above, in a case where services are simultaneously provided to a plurality of terminal devices, there is a problem that delay times are different among the plurality of terminal devices. Accordingly, it is required to equalize the delay time among a plurality of terminal devices.

Therefore, the present disclosure provides a mechanism capable of more reliably equalizing delay times in a plurality of terminal devices.

Note that the above problem or object is merely one of a plurality of problems or objects that can be solved or achieved by the plurality of embodiments disclosed in the present description.

### Solution to Problem

An information processing device of the present disclosure includes a control unit. The control unit adds an additional delay to a transmission signal to be transmitted to a first terminal device and/or an application device according to a first difference between a first RAN delay characteristic and a second RAN delay characteristic and/or a second difference between a first NW delay characteristic and a second NW delay characteristic. The first RAN delay characteristic is a delay characteristic in a first RAN section including at least a first (Radio) Access Network ((R)AN) in a first communication path including the first terminal device, the first (R)AN (Radio Access Network), a first CN (Core Network), and the application device. The second RAN delay characteristic is a delay characteristic in a second RAN section including at least a second (R)AN in a second communication path including a second terminal device, the second (R)AN, a second CN, and the application device. The first NW delay characteristic is a delay characteristic in a first NW section including at least a part of a path excluding the first (R)AN in the first communication path. The second NW delay characteristic is a delay characteristic in a second NW section including at least a part of a path excluding the second (R)AN in the second communication path.

### Brief Description of Drawings

FIG. 1 is a diagram illustrating an outline of a TSN.
FIG. 2 is a diagram illustrating an application example of the TSN to a 5G network.
FIG. 3 is a diagram illustrating an application example of the TSN to the 5G network.
FIG. 4 is a diagram for describing an outline of a communication system according to an embodiment of the present disclosure.
FIG. 5 is a diagram illustrating a configuration example of the communication system according to the embodiment of the present disclosure.
FIG. 6 is a diagram illustrating a configuration example of a management device according to the embodiment of the present disclosure.
FIG. 7 is a diagram illustrating a configuration example of a base station according to the embodiment of the present disclosure.
FIG. 8 is a diagram illustrating a configuration example of a terminal device according to the embodiment of the present disclosure.
FIG. 9 is a diagram illustrating a configuration example of a network management device according to the embodiment of the present disclosure.
FIG. 10 is a diagram illustrating a configuration example of a communication device according to the embodiment of the present disclosure.
FIG. 11 is a diagram illustrating a configuration example of the 5G network.
FIG. 12 is a diagram illustrating a configuration example of a cellular network.
FIG. 13 is a diagram illustrating a usage example of Private/4G.
FIG. 14 is a diagram for describing an example of delay adjustment by the application device.
FIG. 15 is a diagram illustrating an example of a delay distribution.
FIG. 16 is a diagram for describing an example of a communication path according to a first embodiment of the present disclosure.
FIG. 17 is a diagram for describing an example of a common section and a difference section according to the first embodiment of the present disclosure.
FIG. 18 is a diagram for describing an example of the common section and the difference section according to the first embodiment of the present disclosure.
FIG. 19 is a diagram for describing measurement of a delay characteristic by an information processing device according to the first embodiment of the present disclosure.
FIG. 20 is a diagram for describing an example of delay addition processing by the application device according to the first embodiment of the present disclosure.
FIG. 21 is a diagram for describing an example of delay addition according to the first embodiment of the present disclosure.
FIG. 22 is a diagram for describing another example of the delay addition according to the first embodiment of the present disclosure.
FIG. 23 is a sequence diagram for describing an example of a flow of instruction processing of delay addition according to the first embodiment of the present disclosure.
FIG. 24 is a diagram for describing an example of delay addition by the information processing device according to the first embodiment of the present disclosure.
FIG. 25 is a sequence diagram for describing another example of the flow of the instruction processing of delay addition according to the first embodiment of the present disclosure.
FIG. 26 is a sequence diagram for describing another example of the flow of the instruction processing of delay addition according to the first embodiment of the present disclosure.
FIG. 27 is a diagram for describing an example of cooperative control by an application device.
FIG. 28 is a diagram for describing an example of cooperative control by an application device according to a second embodiment of the present disclosure.
FIG. 29 is a sequence diagram for describing an example of a flow of cooperative control processing according to the second embodiment of the present disclosure.

### Description of Embodiments

Hereinafter, embodiments of the present disclosure will be described in detail with reference to the accompanying drawings. Note that, in the present description and the drawings, components having substantially the same functional configuration are denoted by the same reference numerals, and redundant description is omitted.

Further, in the present description and the drawings, similar components of embodiments may be distinguished by adding different alphabets or numbers after the same reference numerals. However, in a case where it is not necessary to particularly distinguish each of similar components, only the same reference numeral is assigned.

One or more embodiments (including examples, modifications, and applications) described below can each be implemented independently. On the other hand, at least some of the plurality of embodiments described below may be appropriately combined with at least some of other embodiments. The plurality of embodiments may include novel features different from each other. Therefore, the plurality of embodiments can contribute to solving different objects or problems, and can exhibit different effects.

### <<1. Outline>>

### <1-1. Overview of TSN network>

In recent years, a technology called Time-Sensitive Network (TSN) has attracted attention.

The TSN is a network that places importance on a time from when a packet is transmitted to when the packet is received. In order to emphasize time, it is important not only that the packet arrives fast but also that the packet arrives at an assumed time. That is, the TSN can be defined as a network having a low delay and a small delay variation (jitter).

Note that the TSN may be defined as a network intended to implement the following functions (1) to (4). TSN is standardized by IEEE 802.1.
(1) Low latency (low delay)
(2) Deterministic (less jitter)
(3) Reliable (less failure)
(4) High-band width (large capacity)

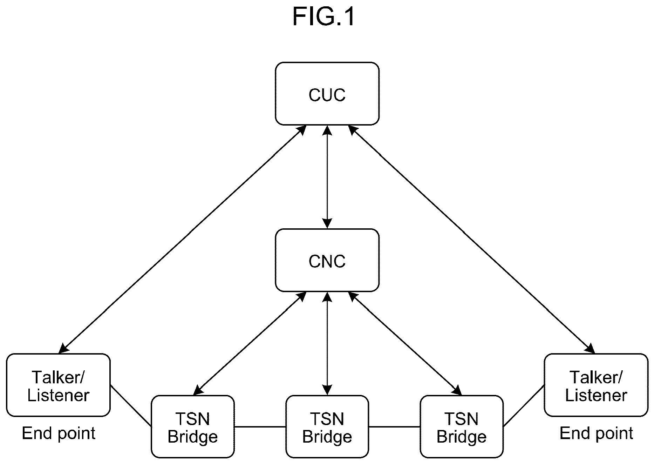

FIG. 1 is a diagram illustrating an outline of a TSN. In the TSN, a packet transmitted from a Talker is transmitted to a Listener via a plurality of bridges (hereinafter, also referred to as a TSN bridge).

Each of the Talker and the Listener is a device or an application to be an endpoint of communication, respectively. For example, the Talker and the Listener may be a server or a terminal device, or may be application functions included in these devices. In addition, the TSN bridge is a network disposed between the Talker and the Listener.

In order to implement the function of the TSN, a centralized user configuration (CUC) and a centralized network configuration (CNC) are arranged in the TSN.

The CUC is an entity that sucks up requirements and settings from the endpoint and transmits them to the CNC. The CNC is an entity that issues various instructions for implementing the functions of the TSN to the TSN bridge.

### <1-2. Application of TSN to 5G network>

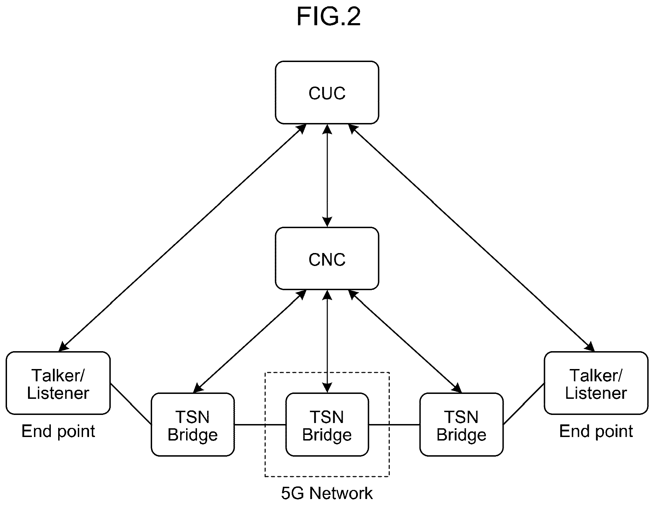

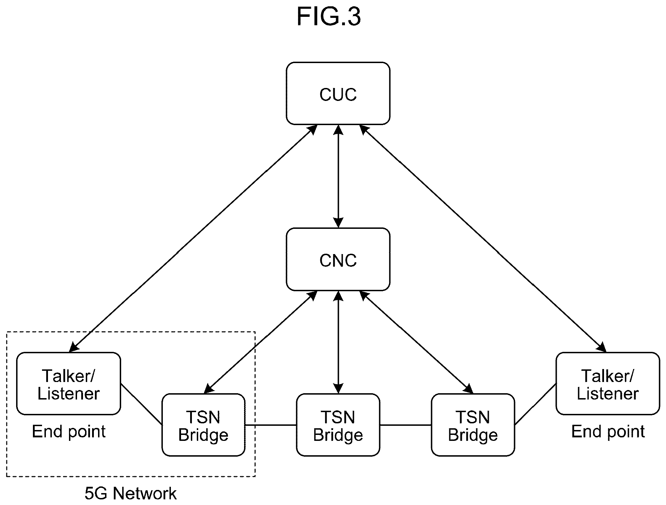

In recent years, application of TSN to a 5G network has been studied. For example, in Release 17 of 3GPP (registered trademark), how to apply TSN to a 5G network has been studied (3GPP TS23.501). FIGS. 2 and 3 are diagrams illustrating an application example of TSN to the 5G network. In the example of FIG. 2, one of a plurality of TSN bridges is the 5G network. In the example of FIG. 3, one of a TSN bridge and an endpoint is the 5G network. Note that the application example of TSN to a 5G network is not limited to the examples illustrated in FIGS. 2 and 3. For example, a plurality of TSN bridges may be a 5G network, or both endpoints may be 5G networks.

### <1-3. Outline of problems and solutions of present embodiment>

For example, services such as a Network Game and a Metaverse can be provided using a 5G network to which TSN is applied. For example, the metaverse is a kind of virtual world constructed on a communication network such as the Internet. A large number of users from various places can simultaneously participate in the metaverse. Each user participates in the metaverse, for example, using their own avatar.

One of the problems in metaverse is variation in delay when an avatar operated by a user participating from each place interacts with another avatar in the virtual world. For example, a physical distance (communication distance) to a global data center in which the virtual space is constructed may be different for each user. The delay varies for each user according to the physical distance. For example, when the data center is in Osaka, a delay that occurs when a user in New York accesses the data center is greater than a delay that occurs when a user in Tokyo accesses the data center.

In order to ensure fairness between users, such as a plurality of users communicating in the same virtual space, it is required to equalize delay times of the plurality of users.

Conventionally, adjustment of a delay time of a user has been performed on software by an application providing a service. When the application adjusts the delay time of the user, there is a problem that it takes time to adjust the delay time, and followability to fluctuation in the delay time is lowered.

Accordingly, in the present embodiment, a device (information processing device) different from the application function that provides the service performs delay adjustment between the users. The information processing device performs delay adjustment according to a delay characteristic of a section obtained by dividing a communication path between a user and an application function into a plurality of sections.

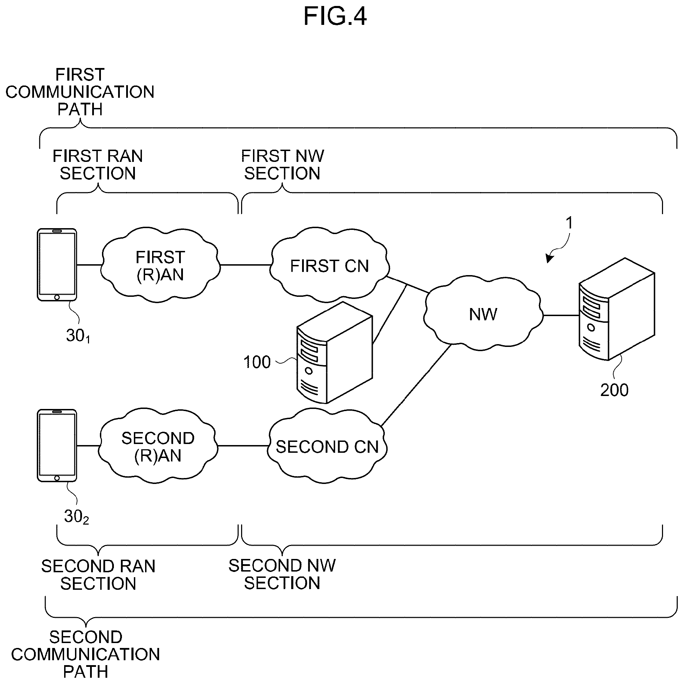

FIG. 4 is a diagram for describing an outline of a communication system 1 according to the embodiment of the present disclosure. The communication system 1 illustrated in FIG. 4 includes terminal devices 30₁ and 30₂, a first (Radio) Access Network ((R)AN), a first Core Network (CN), a second (R)AN, a second CN, a NetWork (NW), an information processing device 100, and an application device 200.

The application device 200 implements a function of an application function for providing a service to the terminal device 30₁ via the first (R)AN and the first CN. The application device 200 implements a function of an application function for providing a service to the terminal device 30₂ via the second (R)AN and the second CN. It is assumed that the terminal devices 30₁ and 30₂ have different physical distances from the application device 200.

The information processing device 100 adds a delay to first data exchanged between the terminal device 30₁ and the application device 200. For example, the information processing device 100 adds a delay so that a first delay time between the terminal device 30₁ and the application device 200 and a second delay time between the terminal device 30₂ and the application device 200 are the same.

For example, the information processing device 100 adds a delay to a transmission signal (data) transmitted to the terminal device 30₁ (an example of a first terminal device) and/or the application device 200 according to a first difference between a first RAN delay characteristic and a second RAN delay characteristic and/or a second difference between a first NW delay characteristic and a second NW delay characteristic.

Here, the first RAN delay characteristic is a delay characteristic in a first (R)AN section including at least the first (R)AN in a first communication path including the terminal device 30₁, the first CN, the first (R)AN, and the application device 200.

The second RAN delay characteristic is a delay characteristic in a second RAN section including at least the second (R)AN in a second communication path including the terminal device 30₂ (an example of the second terminal device), the second CN, the second (R)AN, and the application device 200.

The first NW delay characteristic is a delay characteristic in a first NW section including at least a part of the first communication path excluding the first (R)AN. The second NW delay characteristic is a delay characteristic in a second NW section including at least a part of the second communication path excluding the second (R)AN.

As described above, the first communication path between the terminal device 30₁ and the application device 200 is divided into the first RAN section including at least the first (R)AN and the first NW section including at least a part of the path excluding the first (R)AN. Further, the second communication path between the terminal device 30₂ and the application device 200 is divided into the second RAN section including at least the second (R)AN and the second NW section including at least a part of the path excluding the second (R)AN.

The information processing device 100 adds a delay to the first data according to the first difference between the first RAN delay characteristic in the first (R)AN section and the second RAN delay characteristic in the second (R)AN section. Alternatively, the information processing device 100 adds a delay to the first data according to the second difference between the first NW delay characteristic in the first NW section and the second NW delay characteristic in the second NW section.

In this manner, the information processing device 100 adds a delay to the first data according to the difference in the delay characteristic for each section obtained by dividing the communication path into a plurality of sections for each terminal device 30. Thus, the information processing device 100 can more reliably equalize variations in delay of the plurality of terminal devices 30.

Note that, here, two terminal devices 30 are included in the communication system 1, but the number of terminal devices 30 included in the communication system 1 may be three or more. In addition, here, the communication path is divided into two sections, but the communication path may be divided into three or more sections. For example, the first communication path may be divided into one first RAN section and a plurality of first NW sections.

In this case, the application device 200 determines a delay to be added according to a delay difference in the corresponding section. For example, it is assumed that the first communication path is divided into the first RAN section, the first NW section connected to the first RAN section, and a third NW section between the first NW section and the application device 200. Furthermore, the second communication path is divided into the second RAN section, the second NW section connected to the second RAN section, and a fourth NW section between the second NW section and the application device 200. In this case, the application device 200 determines a delay to be added according to at least one of a delay difference between the first RAN section and the second RAN section, a delay difference between the first NW section and the second NW section, or a delay difference between the third NW section and the fourth NW section.

### <<2. Configuration of communication system>>

While the outline of the present embodiment has been described above, before the present embodiment is described in detail, a configuration of the communication system 1 including an information processing device of the present embodiment will be described. Note that the communication system 1 can be rephrased as an information processing system.

### <2-1. Overall configuration of communication system>

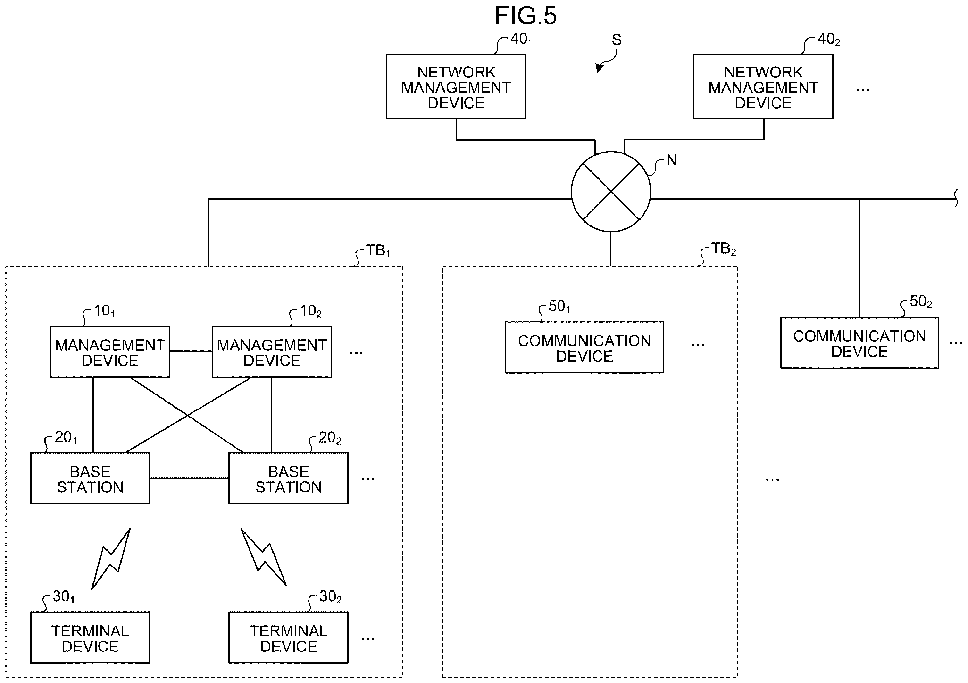

FIG. 5 is a diagram illustrating a configuration example of the communication system 1 according to the embodiment of the present disclosure. The communication system 1 is a TSN system that functions as a TSN. The communication system 1 includes a bridge TB, a communication device 50, and a network management device 40.

The devices constituting the communication system 1 are connected via a network N. Although only one network N is illustrated in the example of FIG. 5, a plurality of networks N may exist.

Here, the network N is, for example, a public network such as the Internet. Note that the network N is not limited to the Internet, and may be, for example, a local area network (LAN), a wide area network (WAN), a cellular network, a fixed telephone network, or a regional Internet protocol (IP) network.

The network N may include a wired network or a wireless network.

The bridge TB is a TSN bridge, and at least one of the bridges TB is a cellular wireless network (hereinafter, also referred to as a cellular network) such as 4G or 5G. In the example of FIG. 5, at least the bridge TB₁ is a cellular network.

In the bridge TB₁, a management device 10, a base station 20, and a terminal device 30 are arranged. The plurality of bridges TB is connected to the network management device 40 via the network N.

The wireless network of the present embodiment includes, for example, a radio access network and a core network.

Note that, in the present embodiment, the wireless communication device is a device having a wireless communication function, and corresponds to the base station 20 and the terminal device 30 in the example of FIG. 5.

The communication system 1 may include a plurality of management devices 10, a plurality of base stations 20, a plurality of terminal devices 30, a plurality of network management devices 40, and a plurality of communication devices 50. In the example of FIG. 5, the communication system 1 includes management devices 10₁ and 10₂ and the like as the management device 10. The communication system 1 includes base stations 20₁ and 20₂ as the base stations 20. The communication system 1 includes terminal devices 30₁ and 30₂ as the terminal devices 30. The communication system 1 includes network management devices 40₁ and 40₂ as the network management devices 40. The communication system 1 includes communication devices 50₁ and 50₂ as the communication devices 50.

Note that the devices in the drawings may be considered as devices in the logical sense. That is, a part of the devices in the drawings may be implemented by a virtual machine (VM), Container, Docker, or the like, and these may be implemented on physically the same hardware.

Note that the wireless network functioning as the bridge TB may support a radio access technology (RAT) such as long term evolution (LTE) or new radio (NR). LTE and NR are a type of cellular communication technology, and enable mobile communication of a terminal device 30 by arranging a plurality of areas covered by a base station 20 in a cell shape.

Note that the radio access method used by the communication system 1 is not limited to LTE and NR, and may be another radio access method such as Wideband Code Division Multiple Access (W-CDMA) or Code Division Multiple Access 2000 (cdma 2000).

In addition, the base station 20 (including a relay station) constituting the wireless network may be a ground station or a non-ground station. The non-ground station may be a satellite station or an aircraft station. If the non-ground station is a satellite station, the wireless network functioning as the bridge TB may be a Bent-pipe (Transparent) type mobile satellite communication system.

Note that, in the present embodiment, the ground station (also described as a ground base station) refers to a base station 20 (a relay station) installed on the ground. Here, the "ground" is a ground in a broad sense including not only land but also underground, on water, and under water. Note that, in the following description, the description of "ground station" may be replaced with "gateway".

Note that an LTE base station 20 may be referred to as an evolved node B (eNodeB) or an eNB. In addition, an NR base station 20 may be referred to as a gNodeB or a gNB. Further, in the LTE and the NR, a terminal device 30 (also described as a mobile station or a terminal) may be referred to as user equipment (UE). Note that the terminal device 30 is a type of communication device, and is also referred to as a mobile station or a terminal.

In the present embodiment, the concept of the communication device includes not only a portable mobile device (terminal device 30) such as a mobile terminal but also a device installed in a structure or a mobile object. The structure or the mobile object itself may be regarded as the communication device. In addition, the concept of the communication device includes not only a terminal device but also a base station and a relay station. The communication device is a type of a processing device and an information processing device. Furthermore, the communication device can be rephrased as a transmission device or a reception device.

Hereinafter, a configuration of each device constituting the communication system 1 will be specifically described. Note that the configuration of each device described below is merely an example. The configuration of each device may be different from the configuration described below.

### <2-2. Configuration of management device>

Next, a configuration of the management device 10 will be described.

The management device 10 is an information processing device (computer) that manages a wireless network. For example, the management device 10 is an information processing device that manages communication of the base station 20. For example, the management device 10 functions as the information processing device 100 described above.

Alternatively, the management device 10 may have a function as, for example, a mobility management entity (MME). The management device 10 may have a function as an access and mobility management function (AMF) and/or a session management function (SMF).

Of course, the functions of the management device 10 are not limited to the MME, the AMF, and the SMF. The management device 10 may be a device having a function as a network slice selection function (NSSF), an authentication server function (AUSF), a policy control function (PCF), or a unified data management (UDM).

The management device 10 may be a device having a function as a home subscriber server (HSS). The management device 10 has a function (CUC or CNC) of the network management device 40, and may function as the network management device 40.

Note that the management device 10 may have a function of a gateway. For example, the management device 10 may have a function as a serving gateway (S-GW) or a packet data network gateway (P-GW). In addition, the management device 10 may have a function of a user plane function (UPF). At this time, the management device 10 may have a plurality of UPFs.

The core network may include a plurality of network functions. Each network function may be aggregated into one physical device, or may be distributed to a plurality of physical devices. That is, the management device 10 can be arranged in a distributed manner in a plurality of devices. Furthermore, this distributed arrangement may be controlled to be performed dynamically.

The management device 10 and the base station 20 constitute one network and provide a wireless communication service to the terminal device 30. The management device 10 is connected to the Internet, and the terminal device 30 can use various services provided via the Internet via the base station 20.

Note that the management device 10 is not necessarily a device constituting the core network. For example, it is assumed that the core network is a core network of Wideband Code Division Multiple Access (W-CDMA) or Code Division Multiple Access 2000 (cdma 2000). At this time, the management device 10 may be a device that functions as a radio network controller (RNC).

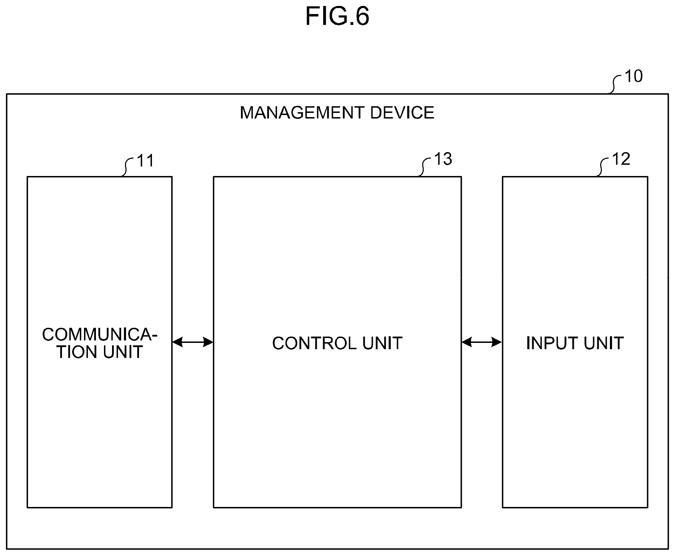

FIG. 6 is a diagram illustrating a configuration example of the management device 10 according to the embodiment of the present disclosure. The management device 10 includes a communication unit 11, a storage unit 12, and a control unit 13. Note that the configuration illustrated in FIG. 6 is a functional configuration, and the hardware configuration may be different from the functional configuration.

In addition, the functions of the management device 10 may be statically or dynamically distributed and implemented in a plurality of physically separated configurations. For example, the management device 10 may include a plurality of server devices.

The communication unit 11 is a communication interface for communicating with other devices. The communication unit 11 may be a network interface or a device connection interface. For example, the communication unit 11 may be a local area network (LAN) interface such as a network interface card (NIC), or may be a USB interface including a universal serial bus (USB) host controller, a USB port, and the like.

The communication unit 11 may be a wired interface or a wireless interface. The communication unit 11 functions as a communication means of the management device 10. The communication unit 11 communicates with the base station 20 and the like under the control of the control unit 13.

The storage unit 12 is a data readable/writable storage device such as a dynamic random access memory (DRAM), a static random access memory (SRAM), a flash memory, or a hard disk. The storage unit 12 functions as a storage means of the management device 10.

The control unit 13 is a controller that controls each unit of the management device 10. The control unit 13 is implemented by, for example, a processor such as a central processing unit (CPU), a micro processing unit (MPU), or a graphics processing unit (GPU).

For example, the control unit 13 is implemented by the processor executing various programs stored in the storage device inside the management device 10 using a random access memory (RAM) or the like as a work area. Note that the control unit 13 may be implemented by an integrated circuit such as an application specific integrated circuit (ASIC) or a field programmable gate array (FPGA). Any of the CPU, the MPU, the GPU, the ASIC, and the FPGA can be regarded as a controller.

### <2-3. Configuration of base station>

Next, a configuration of the base station 20 will be described. The base station 20 can be referred to as a base station (BS).

The base station 20 is a wireless communication device that performs wireless communication with the terminal device 30. The base station 20 may be configured to wirelessly communicate with the terminal device 30 via a relay station, or may be configured to directly wirelessly communicate with the terminal device 30.

The base station 20 is a type of a communication device. More specifically, the base station 20 is a device corresponding to a radio base station (Base Station, Node B, eNB, gNB, or the like) or a wireless access point. The base station 20 may be a wireless relay station. In addition, the base station 20 may be an optical extension device called a remote radio head (RRH) or a radio unit (RU). Furthermore, the base station 20 may be a receiving station such as a field pickup unit (FPU). In addition, the base station 20 may be an integrated access and backhaul (IAB) donor node or an IAB relay node that provides a wireless access line and a radio backhaul line by time division multiplexing, frequency division multiplexing, or space division multiplexing.

Note that the radio access technology used by the base station 20 may be a cellular communication technology or a wireless LAN technology. Of course, the radio access technology used by the base station 20 is not limited thereto, and may be another wireless access technology. For example, the radio access technology used by the base station 20 may be a low power wide area (LPWA) communication technology. Of course, the wireless communication used by the base station 20 may be wireless communication using millimeter waves. In addition, the wireless communication used by the base station 20 may be wireless communication using radio waves or wireless communication (optical radio) using infrared rays or visible light. Further, the base station 20 may be capable of non-orthogonal multiple access (NOMA) communication with the terminal device 30. Here, the NOMA communication is communication using a non-orthogonal resource (transmission, reception, or both). Note that the base station 20 may be able to perform the NOMA communication with another base station 20.

Note that the base stations 20 may be capable of communicating with each other via an interface between a base station and a core network (for example, NG Interface, S1 Interface, or the like). This interface may be either wired or wireless. In addition, the base stations may be capable of communicating with each other via an inter-base station interface (for example, Xn Interface, X2 Interface, S1 Interface, F1 Interface, and the like). This interface may be either wired or wireless.

Note that the concept of the base station includes not only a donor base station but also a relay base station (also referred to as a relay station). For example, the relay base station may be any one of RF Repeater, Smart Repeater, and Intelligent Surface. Further, the concept of the base station includes not only a structure having a function of the base station but also a device installed in the structure.

The structure is, for example, a building such as a high-rise building, a house, a steel tower, a station facility, an airport facility, a harbor facility, an office building, a school building, a hospital, a factory, a commercial facility, or a stadium. Note that the concept of a structure includes not only a building but also a construction (non-building structure) such as a tunnel, a bridge, a dam, a wall, or an iron pillar, and equipment such as a crane, a gate, or a windmill. Further, the concept of the structure includes not only a structure on land (on the ground in a narrow sense) or underground, but also a structure on water such as a platform or a megafloat, and a structure under water such as a marine observation facility. The base station can be rephrased as an information processing device.

The base station 20 may be a donor station or a relay station (relay station). In addition, the base station 20 may be a fixed station or a mobile station. The mobile station is a wireless communication device configured to be movable. At this time, the base station 20 may be a device installed in a mobile object or may be a mobile object itself. For example, a relay station having mobility can be regarded as the base station 20 as a mobile station. Further, a device that is originally capable of moving, such as a vehicle, an unmanned aerial vehicle (UAV) typified by a drone, or a smartphone, and has a function of a base station (at least a part of the function of the base station) also corresponds to the base station 20 as a mobile station.

Here, the mobile object may be a mobile terminal such as a smartphone or a mobile phone. In addition, the mobile object may be a mobile object (for example, a vehicle such as an automobile, a bicycle, a bus, a truck, a motorcycle, a train, or a linear motor car) that moves on land (on the ground in a narrow sense) or a mobile object (for example, the subway) that moves underground (for example, in the tunnel). In addition, the mobile object may be a mobile object (for example, a ship such as a passenger ship, a cargo ship, or a hovercraft) that moves over water or a mobile object (for example, a submersible vessel such as a submersible, a submarine, and an unmanned submersible) that moves under water. Note that the mobile object may be a mobile object (for example, an aircraft such as an airplane, an airship, or a drone) that moves in the atmosphere.

In addition, the base station 20 may be a ground base station (ground station) installed on the ground. For example, the base station 20 may be a base station arranged in a structure on the ground, or may be a base station installed in a mobile object moving on the ground. More specifically, the base station 20 may be an antenna installed in a structure such as a building and a signal processing device connected to the antenna. Of course, the base station 20 may be a structure or a mobile object itself. The "ground" is a ground in a broad sense including not only land (ground in a narrow sense) but also underground, on water, and under water. Note that the base station 20 is not limited to a ground base station. For example, in a case where the communication system 1 is a satellite communication system, the base station 20 may be an aircraft station. From the perspective of a satellite station, an aircraft station located on the earth is a ground station.

Note that the base station 20 is not limited to a ground station. The base station 20 may be a non-ground base station (non-ground station) capable of floating in the air or space. For example, the base station 20 may be an aircraft station or a satellite station.

The satellite station is a satellite station capable of floating outside the atmosphere. The satellite station may be a device mounted on a space mobile object such as an artificial satellite, or may be a space mobile object itself. The space mobile object is a mobile object that moves outside the atmosphere. Examples of the space mobile object include artificial celestial bodies such as artificial satellites, spacecrafts, space stations, and probes. Note that the satellite to be the satellite station may be any of a low earth orbiting (LEO) satellite, a medium earth orbiting (MEO) satellite, a geostationary earth orbiting (GEO) satellite, and a highly elliptical orbiting (HEO) satellite. Of course, the satellite station may be a device mounted on the low earth orbiting satellite, the medium earth orbiting satellite, the geostationary earth orbiting satellite, or the highly elliptical orbiting satellite.

The aircraft station is a wireless communication device capable of floating in the atmosphere, such as an aircraft. The aircraft station may be a device mounted on an aircraft or the like, or may be an aircraft itself. Note that the concept of an aircraft includes not only heavy aircraft such as an airplane and a glider but also light aircraft such as a balloon and an airship. Further, the concept of an aircraft includes not only a heavy aircraft and a light aircraft but also a rotorcraft such as a helicopter and an autogyro. Note that the aircraft station (alternatively, an aircraft on which an aircraft station is mounted) may be an unmanned aerial vehicle such as a drone.

Note that the concept of the unmanned aerial vehicle also includes unmanned aircraft systems (UAS) and tethered UAS. Further, the concept of unmanned aerial vehicles also includes Lighter than Air UAS (LTA) and Heavier than Air UAS (HTA). Other concepts of unmanned aerial vehicles also include High Altitude UAS Platforms (HAPs) .

The size of coverage of the base station 20 may be large like a macro cell or small like a pico cell. Of course, the size of the coverage of the base station 20 may be extremely small like a femto cell. In addition, the base station 20 may have a beamforming capability. In this case, in the base station 20, a cell or a service area may be formed for each beam.

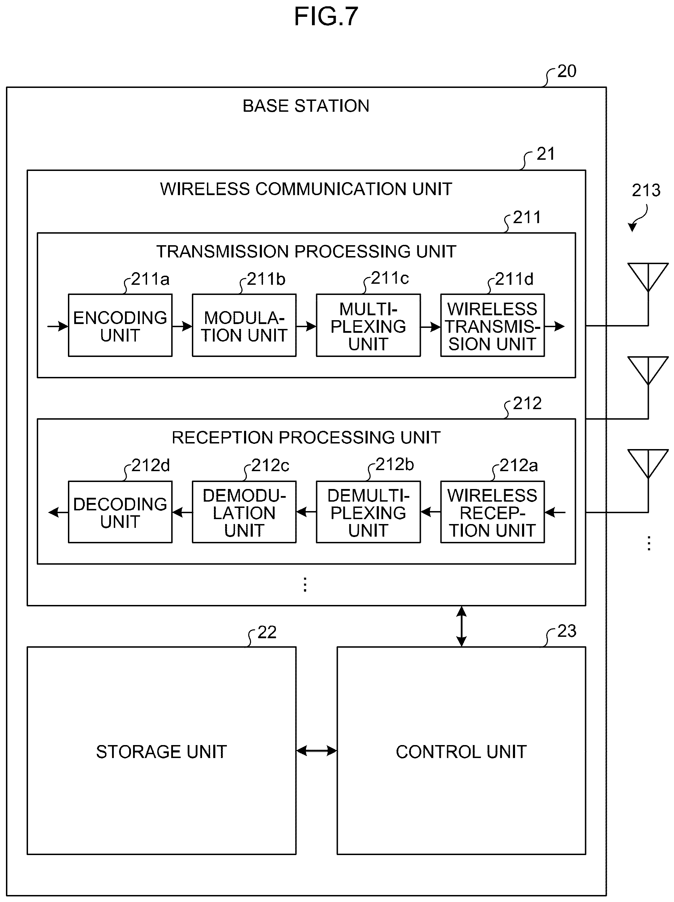

FIG. 7 is a diagram illustrating a configuration example of the base station 20 according to the embodiment of the present disclosure. The base station 20 includes a wireless communication unit 21, a storage unit 22, and a control unit 23. Note that the configuration illustrated in FIG. 7 is a functional configuration, and the hardware configuration may be different from the functional configuration. In addition, the functions of the base station 20 may be implemented in a distributed manner in a plurality of physically separated configurations.

The wireless communication unit 21 is a signal processing unit for wirelessly communicating with other wireless communication devices (for example, the terminal device 30). The wireless communication unit 21 operates under the control of the control unit 23. The wireless communication unit 21 corresponds to one or a plurality of radio access methods. For example, the wireless communication unit 21 supports both the NR and the LTE. The wireless communication unit 21 may be compatible with W-CDMA or cdma 2000 in addition to the NR or the LTE. In addition, the wireless communication unit 21 may support an automatic retransmission technology such as hybrid automatic repeat request (HARQ).

The wireless communication unit 21 includes a transmission processing unit 211, a reception processing unit 212, and an antenna 213. The wireless communication unit 21 may include a plurality of the transmission processing units 211, a plurality of the reception processing units 212, and a plurality of the antennas 213. Note that, in a case where the wireless communication unit 21 supports a plurality of wireless access methods, each unit of the wireless communication unit 21 can be configured individually for each wireless access method. For example, the transmission processing unit 211 and the reception processing unit 212 may be individually configured by the LTE and the NR. In addition, the antenna 213 may include a plurality of antenna elements (for example, a plurality of patch antennas). In this case, the wireless communication unit 21 may be configured to be beamformable. The wireless communication unit 21 may be configured to be able to perform polarization beamforming using vertically polarized waves (V-polarized waves) and horizontally polarized waves (H-polarized waves).

The transmission processing unit 211 performs a process of transmitting downlink control information and downlink data. For example, the transmission processing unit 211 encodes the downlink control information and the downlink data input from the control unit 23 using an encoding method such as block encoding, convolutional encoding, turbo encoding, or the like. Here, the encoding may be performed by polar code encoding or low density parity check code (LDPC code) encoding. Then, the transmission processing unit 211 modulates the coded bits by a predetermined modulation method such as BPSK, QPSK, 16 QAM, 64 QAM, or 256 QAM. In this case, signal points on a constellation do not necessarily have to be equidistant. The constellation may be a non uniform constellation (NUC). Then, the transmission processing unit 211 multiplexes the modulation symbol of each channel and a downlink reference signal and arranges the multiplexed symbols in a predetermined resource element. Then, the transmission processing unit 211 performs various types of signal processing on the multiplexed signal. For example, the transmission processing unit 211 performs processing such as conversion to a frequency domain by fast Fourier transform, addition of a guard interval (cyclic prefix), generation of a baseband digital signal, conversion to an analog signal, quadrature modulation, up-conversion, removal of an extra frequency component, and amplification of power. The signal generated by the transmission processing unit 211 is transmitted from the antenna 213.

The reception processing unit 212 processes the uplink signal received via the antenna 213. For example, the reception processing unit 212 performs, on the uplink signal, down-conversion, removal of an unnecessary frequency component, control of an amplification level, quadrature demodulation, conversion to a digital signal, removal of a guard interval (cyclic prefix), extraction of a frequency domain signal by fast Fourier transform, and the like. Then, the reception processing unit 212 demultiplexes an uplink channel such as a physical uplink shared channel (PUSCH) or a physical uplink control channel (PUCCH) and an uplink reference signal from the signals subjected to these processes. Further, the reception processing unit 212 demodulates the reception signal using a modulation method such as binary phase shift keying (BPSK) or quadrature phase shift keying (QPSK) with respect to a modulation symbol of the uplink channel. The modulation method used for demodulation may be 16 quadrature amplitude modulation (QAM), 64 QAM, or 256 QAM. In this case, signal points on a constellation do not necessarily have to be equidistant. The constellation may be a non-uniform constellation (NUC). Then, the reception processing unit 212 performs a decoding process on the demodulated encoded bits of the uplink channel. Decoded uplink data and uplink control information are output to the control unit 23.

The antenna 213 is an antenna device (antenna unit) that mutually converts a current and a radio wave. The antenna 213 may include one antenna element (for example, one patch antenna) or may include a plurality of antenna elements (for example, a plurality of patch antennas). In a case where the antenna 213 includes a plurality of antenna elements, the wireless communication unit 21 may be configured to be beamformable. For example, the wireless communication unit 21 may be configured to generate a directional beam by controlling the directivity of a wireless signal using a plurality of antenna elements. Note that the antenna 213 may be a dual-polarized antenna. In a case where the antenna 213 is a dual-polarized antenna, the wireless communication unit 21 may use vertically polarized waves (V-polarized waves) and horizontally polarized waves (H-polarized waves) in transmitting wireless signals. Then, the wireless communication unit 21 may control the directivity of the wireless signal transmitted using the vertically polarized wave and the horizontally polarized wave. In addition, the wireless communication unit 21 may transmit and receive spatially multiplexed signals via a plurality of layers including a plurality of antenna elements.

The storage unit 22 is a storage means capable of reading and writing data, such as a DRAM, an SRAM, a flash memory, or a hard disk. The storage unit 22 functions as a storage means of the base station 20.

The control unit 23 is a controller that controls each unit of the base station 20. The control unit 23 is implemented by, for example, a processor such as a CPU or an MPU. For example, the control unit 23 is implemented by a processor executing various programs stored in a storage device inside the base station 20 using a RAM or the like as a work area. Note that the control unit 23 may be implemented by an integrated circuit such as an ASIC or an FPGA. Any of the CPU, the MPU, the ASIC, and the FPGA can be regarded as a controller. In addition, the control unit 23 may be implemented by a GPU in addition to or instead of the CPU. Note that the operation of the control unit 23 may be the same as the operation of each block of the control unit 13 of the management device 10.

In the present embodiment, the concept of a base station may include a collection of multiple physical or logical devices. For example, in the embodiment of the present disclosure, the base station 20 may be distinguished into a plurality of devices such as a baseband unit (BBU) and a radio unit (RU), and may be interpreted as an assembly of the plurality of devices. Further or alternatively, in the embodiments of the present disclosure, the base station 20 may be either or both of a BBU and an RU. The BBU and the RU may be connected by a predetermined interface (for example, the eCPRI or O-RAN interface). Further or alternatively, the RU may be referred to as a remote radio unit (RRU) or a radio dot (RD). Further or alternatively, the RU may correspond to a gNB-DU described later. Further or alternatively, the BBU may correspond to a gNB-CU described later. Alternatively, the RU may be connected to a gNB-DU described later. Further, the BBU may correspond to a combination of a gNB-CU and a gNB-DU described later. Further or alternatively, the RU may be a device integrally formed with the antenna. An antenna (for example, an antenna integrally formed with an RU) included in the base station 20 may adopt an Advanced Antenna System and support MIMO (for example, FD-MIMO) or beamforming. In the Advanced Antenna System, an antenna (for example, an antenna integrally formed with an RU) included in the base station 20 may include, for example, 64 transmission antenna ports and 64 reception antenna ports.

In addition, a plurality of base stations 20 may be connected to each other. The one or more base stations 20 may be included in a radio access network (RAN). That is, the base station 20 may be simply referred to as a RAN, a RAN node, an access network (AN), or an AN node. The RAN in LTE is referred to as an enhanced universal terrestrial RAN (EUTRAN). RAN in NR is referred to as NGRAN. RAN in W-CDMA (UMTS) is referred to as UTRAN. An LTE base station 20 is referred to as an evolved node B (eNodeB) or an eNB. That is, the EUTRAN includes one or more eNodeBs (eNBs). Furthermore, the base station 20 of NR is referred to as a gNodeB or a gNB. That is, the NGRAN includes one or more gNBs. Furthermore, the EUTRAN may include a gNB (en-gNB) connected to a core network (EPC) in an LTE communication system (EPS). Similarly, the NGRAN may include an ng-eNB connected to a core network 5GC in a 5G communications system (5GS). Further or alternatively, when the base station 20 is an eNB, a gNB, or the like, it may be referred to as 3GPP Access. Further or alternatively, when the base station 20 is a wireless access point (for example, WiFi (registered trademark) Access Point), it may be referred to as non-3GPP Access. Further or alternatively, the base station 20 may be an optical extension device called a remote radio head (RRH). Further or alternatively, in a case where the base station 20 is a gNB, the base station 20 may be referred to as a combination of the above-described gNB CU (Central Unit) and gNB DU (Distributed Unit) or any one of them. The gNB CU (Central Unit) hosts a plurality of upper layers (for example, RRC, SDAP, and PDCP) in an access stratum for communication with the UE. On the other hand, the gNB-DU hosts a plurality of lower layers (for example, RLC, MAC, and PHY) of the access stratum. That is, among messages and information described later, RRC signalling (for example, various SIBs including a MIB and a SIB1, an RRCSetup message, and an RRCReconfiguration message) may be generated by the gNB CU, while DCI and various physical channels (for example, PDCCH, PBCH) described later may be generated by the gNB-DU. Alternatively, in the RRC signalling, for example, some configurations (configuration information) such as IE:cellGroupConfig may be generated by the gNB-DU, and the remaining configurations may be generated by the gNB-CU. These configurations (configuration information) may be transmitted and received by an F1 interface to be described later. Note that the base station 20 may be configured to be able to communicate with another base station 20. For example, in a case where a plurality of base stations 20 is eNBs or a combination of an eNB and an en-gNB, the base stations 20 may be connected by an X2 interface. Further or alternatively, when a plurality of base stations 20 is gNBs or a combination of a gn-eNB and a gNB, the devices may be connected by an Xn interface. Further or alternatively, in a case where a plurality of base stations 20 is a combination of a gNB CU (Central Unit) and a gNB DU (Distributed Unit), the devices may be connected by the above-described F1 interface. A message/information (RRC signalling or DCI information, Physical Channel) to be described later may be communicated (for example, via X2, Xn, or F1 interface) among the plurality of base stations 20.

Further, as described above, the base station 20 may be configured to manage a plurality of cells. A cell provided by the base station 20 is referred to as a serving cell(s). The serving cells include a primary cell (PCell) and a secondary cell (SCell). In a case where the dual connectivity (for example, EUTRA-EUTRA Dual Connectivity, EUTRA-NR Dual Connectivity (ENDC), EUTRA-NR Dual Connectivity with 5GC, NR-EUTRA Dual Connectivity (NEDC), and NR-NR Dual Connectivity) is provided to the UE (for example, the terminal device 30), the PCell and zero or one or more SCells(s) provided by the MN (Master Node) are referred to as a Master Cell Group. Further, the serving cell may include a PSCell (Primary Secondary Cell or Primary SCG Cell). That is, when dual connectivity is configured for the UE, the PSCell provided by the SN (Secondary Node) and zero or one or more SCell(s) may be referred to as SCG (Secondary Cell Group). Unless specially configured (for example, PUCCH on SCell), the physical uplink control channel (PUCCH) is transmitted in the PCell and the PSCell, but is not transmitted in the SCell. Further, a radio link failure is also detected in the PCell and the PSCell, but is not detected (need not be detected) in the SCell. As described above, since the PCell and the PSCell have a special role in the serving cell(s), they are also referred to as a special cell (SpCell). One downlink component carrier and one uplink component carrier may be associated with one cell. In addition, a system bandwidth corresponding to one cell may be divided into a plurality of bandwidth parts. In this case, one or a plurality of Bandwidth Parts (BWP) may be configured for the UE, and one Bandwidth Part may be used for the UE as an Active BWP. In addition, radio resources (for example, a frequency band, a numerology (subcarrier spacing), and a slot format (slot configuration)) that can be used by the terminal device 30 may be different for each cell, each component carrier, or each BWP.

### <2-4. Configuration of terminal device>

Next, a configuration of the terminal device 30 will be described. The terminal device 30 can be rephrased as user equipment (UE).

The terminal device 30 is a wireless communication device that wirelessly communicates with other communication devices such as the base station 20. The terminal device 30 is, for example, a mobile phone, a smart device (smartphone or tablet), a personal digital assistant (PDA), or a personal computer. In addition, the terminal device 30 may be a device such as a business camera provided with a communication function, or may be a motorcycle, a moving relay vehicle, or the like on which a communication device such as a field pickup unit (FPU) is mounted. Furthermore, the terminal device 30 may be an industrial robot having a communication function. In addition, the terminal device 30 may be a machine to machine (M2M) device or an Internet of Things (IoT) device.

Note that the terminal device 30 may be able to perform the NOMA communication with the base station 20. In addition, the terminal device 30 may be able to use an automatic retransmission technology such as HARQ when communicating with the base station 20. The terminal device 30 may be capable of sidelink communication with another terminal device 30. The terminal device 30 may be capable of using an automatic retransmission technology such as HARQ when performing sidelink communication. Note that the terminal device 30 may be capable of the NOMA communication in communication (sidelink) with other terminal devices 30. In addition, the terminal device 30 may be capable of performing LPWA communication with another communication device (for example, the base station 20 and another terminal device 30). Further, the wireless communication used by the terminal device 30 may be wireless communication using millimeter waves. Note that the wireless communication (including sidelink communication) used by the terminal device 30 may be wireless communication using radio waves or wireless communication (optical wireless) using infrared rays or visible light.

In addition, the terminal device 30 may be a mobile device. The mobile device is a movable wireless communication device. At this time, the terminal device 30 may be a wireless communication device installed in a mobile object or may be a mobile object itself. For example, the terminal device 30 may be a vehicle that moves on a road such as an automobile, a bus, a truck, or a motorcycle, a vehicle that moves on a rail installed on a track such as a train, or a wireless communication device mounted on the vehicle. Note that the mobile object may be a mobile terminal, or may be a mobile object that moves on land (on the ground in a narrow sense), underground, on water, or under water. In addition, the mobile object may be a mobile object that moves inside the atmosphere, such as a drone or a helicopter, or may be a mobile object that moves outside the atmosphere, such as an artificial satellite.

The terminal device 30 may be simultaneously connected to a plurality of base stations or a plurality of cells to perform communication. For example, in a case where one base station supports a communication area via a plurality of cells (for example, pCell and sCell), it is possible to bundle the plurality of cells and communicate between the base station 20 and the terminal device 30 by a carrier aggregation (CA) technology, a dual connectivity (DC) technology, or a multi-connectivity (MC) technology. Alternatively, the terminal device 30 and the plurality of base stations 20 can communicate with each other by a coordinated transmission and reception (coordinated multipoint transmission and reception (CoMP)) technology via cells of different base stations 20.

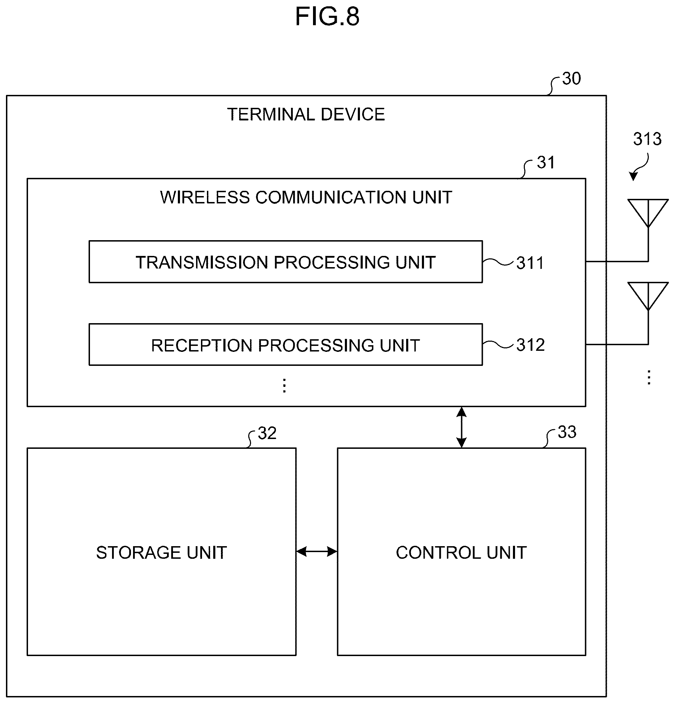

FIG. 8 is a diagram illustrating a configuration example of the terminal device 30 according to the embodiment of the present disclosure. The terminal device 30 includes a wireless communication unit 31, a storage unit 32, and a control unit 33. Note that the configuration illustrated in FIG. 8 is a functional configuration, and the hardware configuration may be different from the functional configuration. In addition, the functions of the terminal device 30 may be implemented in a distributed manner in a plurality of physically separated configurations.

The wireless communication unit 31 is a signal processing unit for wirelessly communicating with other wireless communication devices (for example, the base station 20 and another terminal device 30). The wireless communication unit 31 operates under the control of the control unit 33. The wireless communication unit 31 includes a transmission processing unit 311, a reception processing unit 312, and an antenna 313. The configurations of the wireless communication unit 31, the transmission processing unit 311, the reception processing unit 312, and the antenna 313 may be similar to those of the wireless communication unit 21, the transmission processing unit 211, the reception processing unit 212, and the antenna 213 of the base station 20. In addition, the wireless communication unit 31 may be configured to be beamformable similarly to the wireless communication unit 21. Furthermore, the wireless communication unit 31 may be configured to be able to transmit and receive spatially multiplexed signals similarly to the wireless communication unit 21.

The storage unit 32 is a storage device capable of reading and writing data, such as a DRAM, an SRAM, a flash memory, or a hard disk. The storage unit 32 functions as a storage means of the terminal device 30.

The control unit 33 is a controller that controls each unit of the terminal device 30. The control unit 33 is implemented by, for example, a processor such as a CPU or an MPU. For example, the control unit 33 is implemented by a processor executing various programs stored in a storage device inside the terminal device 30 using a RAM or the like as a work area. Note that the control unit 33 may be implemented by an integrated circuit such as an ASIC or an FPGA. Any of the CPU, the MPU, the ASIC, and the FPGA can be regarded as a controller. Further, the control unit 33 may be implemented by a GPU in addition to or instead of the CPU. Note that the operation of the control unit 33 may be the same as the operation of each block of the control unit 13 of the management device 10.

### <2-5. Configuration of network management device>

Next, a configuration of the network management device 40 will be described.

The network management device 40 is an information processing device (computer) having a function of managing (or controlling) the TSN network. For example, the network management device 40 is an information processing device (computer) that functions as a centralized user configuration (CUC) or a centralized network configuration (CNC).

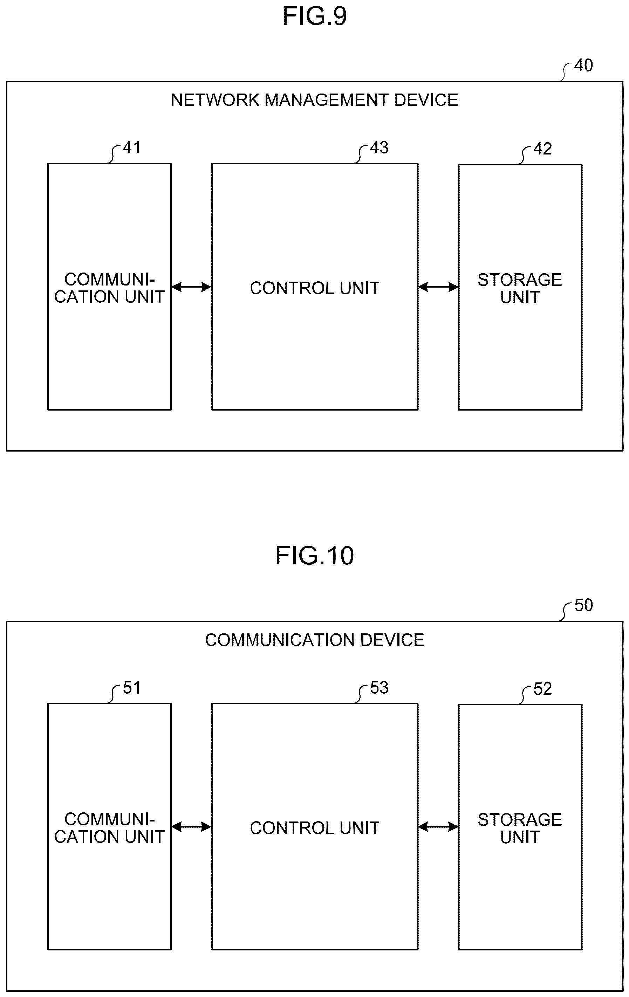

FIG. 9 is a diagram illustrating a configuration example of a network management device 40 according to the embodiment of the present disclosure. The network management device 40 includes a communication unit 41, a storage unit 42, and a control unit 43. Note that the configuration illustrated in FIG. 9 is a functional configuration, and the hardware configuration may be different from the functional configuration. In addition, the functions of the network management device 40 may be statically or dynamically distributed and implemented in a plurality of physically separated configurations. For example, the network management device 40 may include a plurality of server devices.

The communication unit 41 is a communication interface for communicating with other devices. The communication unit 41 may be a network interface or a device connection interface. For example, the communication unit 41 may be a LAN interface such as an NIC, or may be a USB interface configured by a USB host controller, a USB port, or the like. Further, the communication unit 41 may be a wired interface or a wireless interface. The communication unit 41 functions as a communication means of the network management device 40. The communication unit 41 communicates with the management device 10 and the like under the control of the control unit 43.

The storage unit 42 is a storage device capable of reading and writing data, such as a DRAM, an SRAM, a flash memory, or a hard disk. The storage unit 42 functions as a storage means of the network management device 40.

The control unit 43 is a controller that controls each unit of the network management device 40. The control unit 43 is implemented by, for example, a processor such as a CPU, an MPU, or a GPU. For example, the control unit 43 is implemented by a processor executing various programs stored in a storage device inside the network management device 40 using a RAM or the like as a work area. Note that the control unit 43 may be implemented by an integrated circuit such as an ASIC or an FPGA. Any of the CPU, the MPU, the GPU, the ASIC, and the FPGA can be regarded as a controller.

### <2-6. Configuration of communication device>

Next, a configuration of the communication device 50 will be described.

The communication device 50 is a communication device constituting a TSN bridge TB. For example, the communication device 50 may be a server constituting the TSN bridge TB or a communication device (for example, the management device 10, the base station 20, or the terminal device 30) constituting a wireless network. Furthermore, the communication device 50 may be a communication device to be an endpoint (Talker or Listener) of a TSN network. For example, the communication device 50 may be the terminal device 30 or a server that transmits data to a communication device to be an endpoint. Furthermore, the communication device 50 may be a device (for example, CUC or CNC) constituting a TSN system. The communication device 50 can function as, for example, the application device 200 described above.

Note that, in a case where the communication device 50 is a server, the communication device 50 may be an application server or a web server. In addition, the communication device 50 may be a PC server, a midrange server, or a mainframe server. Furthermore, the communication device 50 may be an information processing device that performs data processing (edge processing) near a user or a terminal. For example, the communication device 50 may be an information processing device (computer) provided side by side with or built in a base station. Of course, the communication device 50 may be an information processing device that performs cloud computing.

FIG. 10 is a diagram illustrating a configuration example of the communication device 50 according to the embodiment of the present disclosure. The communication device 50 includes a communication unit 11, a storage unit 12, and a control unit 13. Note that the configuration illustrated in FIG. 10 is a functional configuration, and the hardware configuration may be different from the functional configuration. In addition, the functions of the communication device 50 may be implemented in a distributed manner in a plurality of physically separated configurations. For example, the communication device 50 may include a plurality of information processing devices.

The communication unit 51 is a communication interface for communicating with other devices. For example, the communication unit 51 is a network interface. For example, the communication unit 51 is a LAN interface such as an NIC. Note that the communication unit 51 may be a wired interface or a wireless interface. The communication unit 51 functions as a communication means of the communication device 50. The communication unit 51 communicates with other communication devices under the control of the control unit 53.

The storage unit 52 is a storage device capable of reading and writing data, such as a DRAM, an SRAM, a flash memory, or a hard disk. The storage unit 52 functions as a storage means of the communication device 50.

The control unit 53 is a controller that controls each unit of the communication device 50. The control unit 53 is implemented by, for example, a processor such as a CPU or an MPU. For example, the control unit 53 is implemented by a processor executing various programs stored in a storage device inside the communication device 50 using a RAM or the like as a work area. Note that the control unit 53 may be implemented by an integrated circuit such as an ASIC or an FPGA. Any of the CPU, the MPU, the ASIC, and the FPGA can be regarded as a controller.

### <<3. Wireless network and TSN network>>

Although the configuration of the communication system 1 has been described above, the wireless network and the TSN network will be described before the operation of the communication system 1 is described in detail.

### <3-1. Cellular network>

### <3-1-1. Role of cellular network and core network>

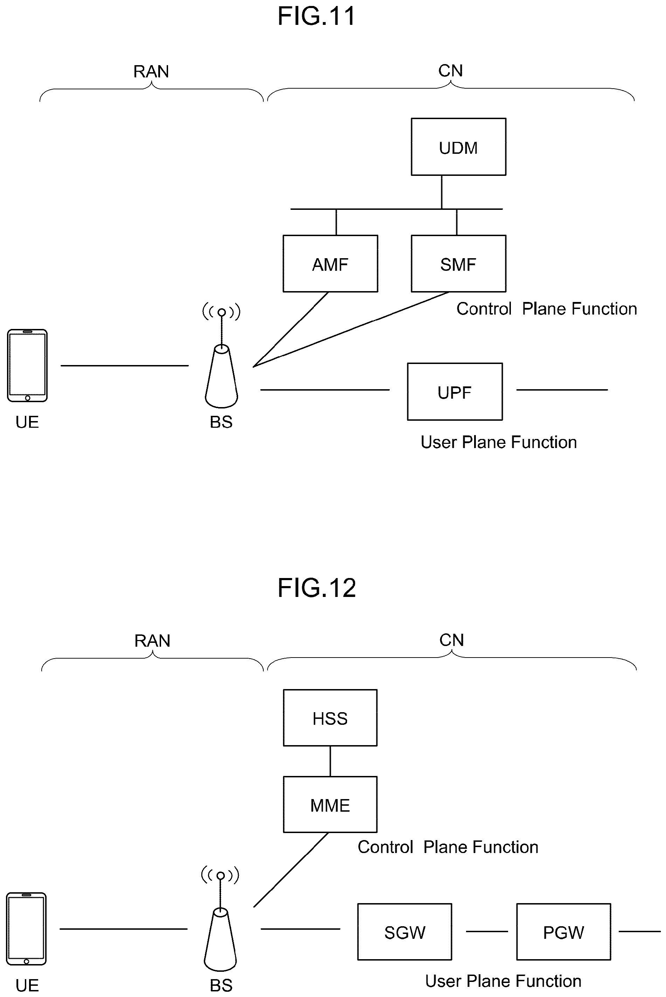

FIGS. 11 and 12 are diagrams illustrating a configuration example of a cellular network. Specifically, FIG. 11 is a diagram illustrating a configuration example of a 5G network. FIG. 12 is a diagram illustrating a configuration example of a 4G network.

The cellular network includes a radio access network (RAN) and a core network (CN). The RAN is a wireless system between the base station 20 and the terminal device 30. In wireless communication, modulation and demodulation techniques for enabling communication are important. In addition, in wireless communication, how to allocate limited resources (time resources and/or frequency resources) to each terminal device 30 is important.

In the RAN, a frame configuration is used as a time resource. In the RAN, one frame is configured with 10 ms. One frame includes 10 subframes. Each subframe is composed of a downlink OFDM symbol and an uplink OFDM symbol.

In the RAN, a basic unit of a frequency band is referred to as a component carrier. In the RAN, a frequency band such as 20 MHz is handled as one unit as a frequency resource. In the RAN, a plurality of component carriers can be bundled and used.

The CN mainly performs permission and session management when the terminal device 30 is connected to the network. In both the 4G and the 5G, the CN includes a control plane function and a user plane function.

The control plane function receives information from a data server called a home subscriber system (HSS) in which subscriber information of the UE is stored, and determines whether or not the UE is allowed to connect to a network by using subscription information of the UE and a key for encryption, and generates a key for encryption. That is, in order for the UE to connect to the cellular network, information of the UE associated with a subscriber number of an international mobile subscriber identity (IMSI) in a subscriber identity module (SIM) card in the UE needs to be stored in an HSS (UDM). The HSS may also be referred to as a unified data management (UDM).

In order to attach the UE to the cellular system, in the case of 4G, the mobility management function (MME) played this role. In the case of 5G, the AMF or the SMF plays the role. In a case where the UE is connected to a network and transmits and receives data, a function of a user plane of the CN is required. In the case of 4G, the S-GW and the P-GW plays this role. In the case of 5G, the user plane function (UPF) plays this role. The 4G P-GW and the 5G UPF serve as a gateway to be a boundary between the CN and an external communication network (for example, the Internet). The CN may be located in the public Internet. Accordingly, a CN-U (user plane) corresponding to the P-GW or the UPF may be regarded as a gateway arranged at a boundary between the CN and a general application.

### <3-1-2. Private 5G/4G>

For example, in the case of TSN as described above, low delay and/or low jitter (small variation in delay) is required. As a system that implements such a low delay, a system using a private 5G/4G is conceivable. In the private 5G/4G, the network can be customized specifically for the application. Accordingly, there is a high possibility that the private 5G/4G is used when low delay and low jitter are implemented.

Currently, a local area network (LAN) is arranged in many offices and homes. The LAN includes a LAN cable, a router, and the like. The communication device is connected to an Internet Service Provider (ISP) via the LAN. A private 5G (Private 5G) or a private 4G (Private 4G) operates by placing the cellular base station 20 in the LAN. In 3GPP, the private 5G/4G is called a non-public network.

In the private 5G/4G, the base station 20 and the terminal device 30 are arranged, for example, in an office, a factory, a private home, or the like in which a LAN is arranged. On the other hand, a core network (CN) that controls the base station 20 may be arranged in a LAN or may be arranged in a cloud data center in the Internet. The base station 20 and the CN are given a private IP address, and can communicate with each other. For example, the base station 20 and the CN can communicate with each other using a private IP address by using a technology such as a virtual private network. Thus, the network connecting the base station 20 and the CN can be treated as a private network.

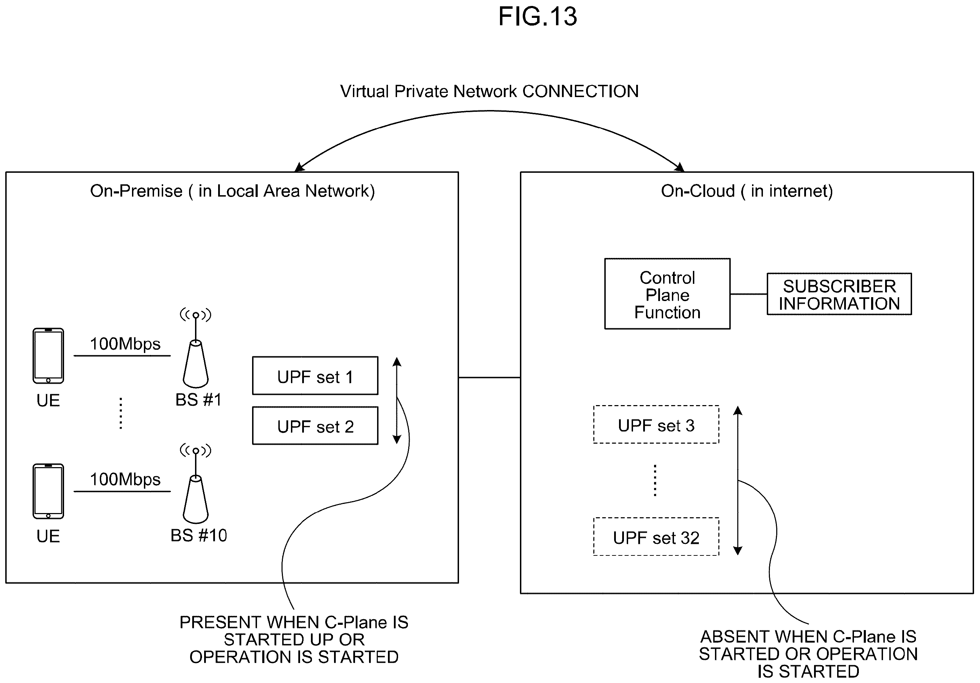

FIG. 13 is a diagram illustrating a usage example of the private 5G/4G. In the example of FIG. 13, a plurality of user plane functions of the CN is arranged in the LAN and the cloud, and the control plane function of the CN is arranged in the cloud. Furthermore, in the example of FIG. 13, the base station 20 and the UE are arranged in a LAN area.

The private 5G/4G is a non-public network. In the private 5G/4G, it is often assumed that the UE, the base station 20, the CN, and the application are located inside the virtual private network. In this case, for example, the UE and the base station 20 may be located in a LAN area. In addition, the CN and the application may be arranged in either a LAN area or a cloud in the Internet.

### <3-2. TSN network>

Although the wireless network has been described above, the TSN network will be described below.

### <3-2-1. Relationship between Industry 4.0 and TSN>

Industry 4.0 is a term meaning the fourth industrial revolution, and is a technology for implementing high-mix low-volume production in addition to conventional mass production. A smart factory is one of use cases of Industry 4.0. The smart factory enables communication of any system in the factory, thereby improving the efficiency of the factory.

A digital twin is regarded as a core technology of Industry 4.0. With the digital twin, the situation of the system in the factory can be grasped on the network side, and the grasped situation can be reflected again in the control of actual equipment on the factory side. In recent years, the digital twin is also used in a use case for controlling the entire city. The digital twin can be defined as a subset of Industry 4.0.

A time sensitive network (TSN) is exemplified as a core technology for implementing Industry 4.0. The TSN is also used for the smart factory of Industry 4.0. The TSN is also used for the digital twin derived from Industry 4.0.

Note that Internet of Things (IoT) is used as a concept similar to Industry 4.0. In the present embodiment, the IoT can be used as a concept similar to that of the industry 4/0 without particular distinction.

### <3-2-2. Metaverse>

As described above, as a use case in which many users interact in a common virtual space, there is a metaverse. The metaverse is required to have a short delay with a plurality of users, to have the same experience at the same time, and the like. As described above, the metaverse has a technical common part with the TSN and the digital twin described above. The technology according to the present embodiment is also suitable for metaverse in addition to the TSN and the digital twin.

### <3-2-3. TSN network overview>

The TSN is a network that places importance on a time from when a packet is transmitted to when the packet is received. For example, it can be said that the TSN is a network in which time is strictly handled. Here, strictly handling a time means that a delay is low, and also includes a meaning that a packet arrives at an assumed time. That is, the TSN is a network required to have a low delay and a small delay variation (jitter). TSN has been standardized by IEEE 802.1. That is, the TSN was originally a technology for a wired network.

Note that the TSN network may be defined as a network intended to implement the following functions (1) to (4).
(1) Low latency (low delay)
(2) Deterministic (less jitter)
(3) Reliable (less failure)
(4) High-band width (large capacity)

In order to implement the above function, the following means is prepared in TSN.

### - Time synchronization

Time synchronization means that applications are synchronized in time. That is, the time of the application on the reception side that is expected to receive the packet at this time is the same as the time of the application on the transmission side that is expected to deliver the packet at that time. In the TSN, a generalized Precision Time Protocol (gPTP) is used to adjust a clock.

### - Scheduled traffic

In the TSN, a place (time slot) where a packet can be transmitted is periodically prepared. The communication device preferentially transmits the packet to other packets in the time slot. In the TSN, a plurality of queues is prepared. When a packet to be transmitted in the time slot has arrived at the queue, the packet to be prioritized is transmitted first. The other packets are transmitted only when there is no packet to be preferentially transmitted in the time slot. Whether to be transmitted in a periodic time slot is determined by an identifier (for example, a priority code point of a VLAN tag in the Ethernet header) of a traffic type allocated to the packet. This identifier can be changed for each application. The queue of priority control is prepared for each network called a bridge. Therefore, when the packet passes through the plurality of bridges, the packet is delayed at a granularity of time slots.

### - Frame Preemption

Frame preemption is interrupt priority control, and refers to a mechanism in which a priority packet makes a non-priority packet wait. That is, Frame Preemption is a control rule used for a plurality of queues.

### - Per-stream filtering and policing

Per-stream filtering and policing are methods of filtering (also referred to as shaping) each traffic (stream) so as not to exceed a permitted band. For example, in a case where the traffic allowed to be 10 Mbps is 20 Mbps, the communication device stores the traffic once in the buffer and then transmits the traffic at intervals of 10 Mbps. Thus, even if the traffic is 20 Mbps in a burst manner, the data is averaged to 10 Mbps.

### - Frame replication and elimination for reliability

Frame replication and elimination for reliability is a technology in which one packet is copied into a plurality of packets, the plurality of packets is then transmitted through a plurality of paths, and when the plurality of packets is received, the plurality of packets is returned to one packet. Thus, reliability is improved due to redundancy in a section using a plurality of routes.

The above are the five main means for implementing TSN. As entities for implementing these means, a centralized user configuration (CUC) and a centralized network configuration (CNC) are prepared in the TSN.

The CUC is an entity that absorbs requirements and settings of a device or an application to be an endpoint of the TSN network and transmits the requirements and settings to the CNC. The CNC is an entity that provides an instruction to implement five means for each bridge between endpoints.

### <3-2-4. Exemplary use cases of TSN network>

As a typical use case of TSN, a case of controlling industrial equipment in a factory is assumed. In this case, communication between the controller and the controller (C to C), communication between an end device such as an actuator and the controller (C to D) is necessary.

The traffic required for C to C and C to D in the factory may be periodic or aperiodic (sporadic). The cycle also varies depending on the traffic. Some have a cycle equal to or less than 1 ms, and some have a cycle of 10 ms to 50 ms. Some long ones are, for example, for network control applications and have a period of 50 ms to 1 s.

### <3-2-5. Function of current 5G network relative to TSN network>

In 3GPP Release 17, it was considered how to apply TSN to 5G networks (3GPP TS23.501). Here, the 5G network is defined as one of bridges (hereinafter, also referred to as a TSN bridge) defined in the TSN.

For example, in a 5G network, each of a UE or a UPF may be an entrance or an exit of TSN traffic. At the entrance and the exit, a function called a TSN translator (TT) for converting a TSN setting or the like into a setting inside the 5G network is prepared. The TT includes a DS-TT disposed on the device side such as the UE and an NS-TT disposed on the network side such as the UPF.

Frame replication and elimination for reliability of TSN is implemented by copying and sending a plurality of packets between DS-TT and NS-TT. In this case, it is desirable that different carriers are used.

The CNC configures a quality of service (QoS) 5QI in the 5G network according to a requirement condition such as a TSN delay. Thus, in the 5G network, communication with less delay and fluctuation required as a TSN is implemented. Current 5G networks use these low latency technologies to implement communication with less jitter required in the TSN.

As described above, in the current 5G system, what can be performed in the existing 5G system is set by the CNC on the TSN side rather than preparing a new function for the TSN, so that the 5G system implements the function of the TSN.

As information configured in the 5G network by the CNC, there is Time Sensitive Communication (TSC) Assistance Information. This is information regarding the cycle of the traffic, the arrival time of the packet, and the like, and is provided from the TSN side. However, details such as how the 5G system should control the packet on the basis of this information have not been studied.

As described above, the 5G system is required to operate on the basis of information provision from the TSN side. On the other hand, the detailed mechanism is not fixed. In addition, when a new feature (technology) is added to the TSN side, a response according to the feature may be required on the 5G system side.

### <3-2-6. Delay of communication section for each of plurality of users>

The delay between the application device 200 and the UE varies depending on the location of each UE. Multiple UEs may each belong to different core networks. The region in which the UE is located varies around the world such as Asia, Europe, and the United States. There are various delays between each UE located in various regions and the application device 200, and values of the delays are also various.

There is a case where the application device 200 desires to unify the delay times of the plurality of UEs. For example, in a case of providing a game service, the application device 200 may equalize delay times between UEs in order to prevent unfairness between the UEs.

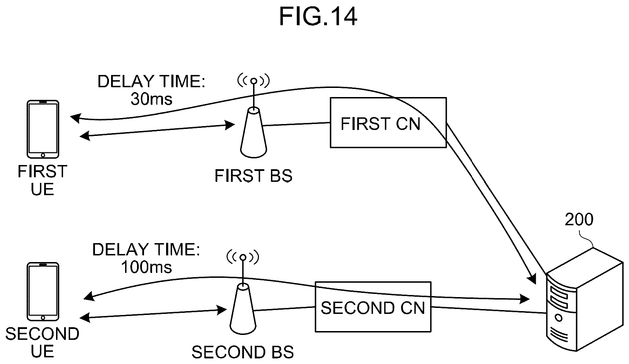

FIG. 14 is a diagram for describing an example of delay adjustment by the application device 200. Note that, in FIG. 14, description of some components of the communication system 1 is omitted.

In FIG. 14, the application device 200 provides the game service to the first UE via the first CN and a first base station (BS). In addition, the application device 200 provides the game service to the second UE via the second CN and a second BS.

For example, it is assumed that the first UE is located closer to the application device 200 than the second UE. In this case, the first UE has a shorter delay time than the second UE. For example, it is assumed that the delay time of the first UE is 30 ms and the delay time of the second UE is 100 ms.

If the application device 200 provides the game service to the first and second UEs without adjusting the delay, the second UE having a long delay time may be disadvantageous in the progress of the game. For example, in a case where the first UE and the second UE play a game in which the first UE and the second UE compete for one flag, if the application device 200 does not adjust the delay, the first UE is advantageous and the second UE is disadvantageous.

Conventionally, in order to reduce this sense of unfairness, the application device 200 performs delay adjustment between a plurality of UEs. For example, as described above, when the delay time of the first UE is 30 ms and the delay time of the second UE is 100 ms, the application device 200 adds a delay of 70 ms to the transmission/reception data with the first UE, thereby securing the fairness between the first and second UEs.

However, the application device 200 sets this delay to semi-static (semi-static). Accordingly, it has been difficult for the application device 200 to equalize the variation in delay between the first and second UEs in consideration of the variation in delay that occurs instantaneously.

As described above, conventionally, the delay between the plurality of UEs is adjusted by the software of the application device 200. In addition to (or instead of) the delay adjustment performed by the software of the application device 200, the communication system 1 according to the present embodiment performs delay adjustment in the entire communication system 1 (network) to ensure fairness among a plurality of UEs.

### <3-2-7. Communication path>

In the present embodiment, the communication system 1 divides the communication path into a plurality of sections and performs delay adjustment. Here, the communication path is an End to End path between the UE and the application device 200. In the present embodiment, the communication system 1 decomposes the communication path into a RAN section including at least (R)AN and an NW section including at least a part of the communication path excluding (R)AN. The NW section is, for example, a section including at least a part of a core network and a network to which the application device 200 is connected, such as the Internet.

For example, the NW section includes a section between the BS and the application device 200. The delay of the NW section depends on the distance between the BS and the application device 200 (the length of the NW section). On the other hand, the RAN section includes a section between the BS and the UE. The delay in the RAN section is greatly affected by scheduling of wireless communication in this section. That is, the delay in the RAN section depends on the delay due to the waiting time until the downlink resource and the uplink resource are allocated by scheduling.

Therefore, in the present embodiment, the communication system 1 divides the communication path into a plurality of sections according to a factor of delay, for example, and performs delay adjustment for each section. Thus, the communication system 1 can cope with delay fluctuation.

Note that, as illustrated in FIG. 4, the communication system 1 decomposes the communication path into a plurality of sections (RAN section and NW section) for each terminal device 30 (UE).

### <3-2-8. Delay characteristics>

The above-described delay includes an average delay and a jitter that is a variation of the delay. Hereinafter, the average delay and the jitter are collectively referred to as a delay characteristic or a delay. In addition, there are a case where the delay characteristic is stationary and does not change much and a case where the delay characteristic is non-stationary and changes with time.

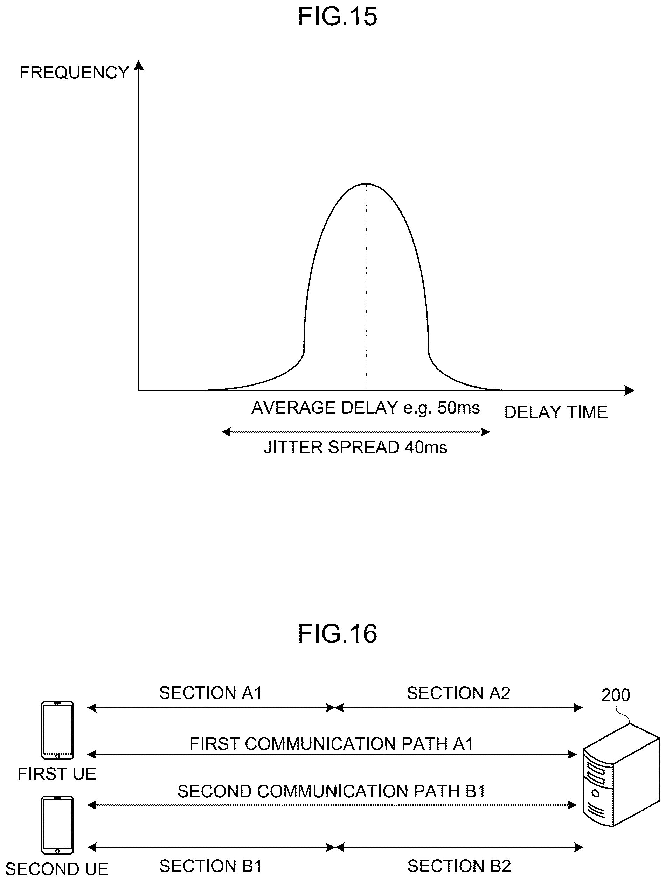

FIG. 15 is a diagram illustrating an example of a delay distribution. The horizontal axis of the graph illustrated in FIG. 15 represents the delay time, and the vertical axis represents the degree (frequency).

As illustrated in FIG. 15, the delay occurs with a predetermined spread. In the example of FIG. 15, the average delay is 50 ms, and the jitter spread is 40 ms.

### <3-2-9. Standardization trend>

As described above, application of TSN to a 5G network has been studied. For example, 3GPP TS23.501 describes a case where one UE performs TSN communication by using a plurality of UPFs. A network that is a target of the TSN is referred to as a bridge. In 3GPP TS23.501, it is specified that 5G is treated as a bridge. Then, standardization of a method for converting the configuration content of the conventional TSN into a configuration parameter that can be understood by the 5G network at the entrance of the 5G network is currently in progress.

### <<4. Operation of communication system 1>>

Based on the above, the operation of the communication system 1 will be described below.

Note that, in the following description, the wireless network functioning as a TSN bridge is assumed to be a 5G network, but the wireless network functioning as the TSN bridge may be a wireless network other than the 5G network. For example, the wireless network functioning as the TSN bridge may be a cellular network other than the 5G network such as a 4G network. In the following description, the 5G network that functions as a TSN bridge is simply referred to as the 5G network.

Furthermore, the information processing device 100 that performs delay adjustment can be a device (for example, the management device 10) that implements a function of a core network. That is, the information processing device 100 can be a device disposed in the core network, but the information processing device 100 is not limited thereto.

The information processing device 100 may be a device disposed outside the core network. In this case, the information processing device 100 is arranged in the vicinity of the core network, more specifically, in the vicinity of the core network than the application device 200.

In addition, in the following description, it is assumed that the application device 200 executes an application using the TSN network. For example, the application may be an application function included in a communication device to be an endpoint of the TSN network (for example, a drone or an industrial robot, or a server that controls them). In this case, the communication device corresponds to the application device 200. Furthermore, a communication device itself to be an endpoint may be regarded as an application. In addition, a part or all of the TSN system using the 5G network may be regarded as an application. For example, the network management device 40 (for example, the CUC or CNC of the TSN network) may be regarded as an application. In the following description, "application" or "application device 200" can be rephrased as "communication device".

In addition, in the following description, a case where the application device 200 communicates with two UEs (the first UE and the second UE) will be described, but the number of UEs with which the application device 200 communicates is not limited to two. The application device 200 may communicate with three or more UEs.

In the following description, the communication path is divided into two sections, but the plurality of sections included in the communication path is not limited to two. The communication path may be divided into three or more sections.

### <4-1. First embodiment>

Next, an operation of the communication system 1 of a first embodiment will be described.

### <4-1-1. Problem 1-1>

The delay time and jitter of the UE change depending on the distance to the application device 200, a communication device arranged on the communication path, and the like. That is, UEs having different distances and communication devices have different delay characteristics.

For example, in a case where the difference between the first delay time between the first UE and the application device 200 and the difference between the second delay time between the second UE and the application device 200 can be grasped, the application device 200 can adjust the delay difference between the first UE and the second UE. For example, the application device 200 can reduce the delay difference between the first and second UEs by delaying the processing for the signal of the UE (for example, the first UE) with a small delay for the same time as the delay difference. Thus, it is possible to correct the unfairness regarding the delay between the first and second UEs.

However, when the application device 200 performs delay adjustment, some problems may occur.

The first problem is that the load on the application device 200 located at the final stage of the communication path increases. For example, in a case where buffering is performed to delay processing, if the delay difference between the first and second UEs becomes too large, there is a possibility that a load of a buffer amount becomes too large.

The second problem is that the processing speed of the application device 200 may decrease. For example, in a case where next processing cannot be performed unless a signal to be subjected to delay adjustment is processed, as the delay difference increases, time is necessary for delay adjustment, and the processing speed of the application device 200 decreases. Accordingly, a method of preventing a decrease in processing speed by limiting the delay adjustment target to the control signal is conceivable, but also in this case, the processing speed of the application device 200 decreases as the delay difference between the first and second UEs increases.

A third problem is that there is a possibility that a larger delay variation (jitter) occurs due to overlapping of the delay variations occurring in a plurality of sections of one communication path. This jitter is not steady but changes greatly instantaneously. The application device 200 adjusts the average delay. Accordingly, it is difficult for the application device 200 to adjust the delay that changes greatly at this moment.

A fourth problem is followability of delay adjustment. When a condition changes anywhere in the communication path and a delay characteristic (average delay and/or jitter) changes, the application device 200 needs to reacquire the delay characteristic. In order to improve the followability, for example, the communication path is divided into a plurality of sections, and the communication system 1 reacquires the delay characteristic in some sections, so that the communication system 1 may be able to efficiently follow the change in the delay.

### <4-1-2. Solution 1-1>

In the communication system 1 according to the present embodiment, the communication path between the UE and the application device 200 is divided into a plurality of sections. FIG. 16 is a diagram for describing an example of a communication path according to the first embodiment of the present disclosure. In the present embodiment, the communication path is divided into a plurality of sections for each UE.

In the example of FIG. 16, the first and second UEs communicate with the application device 200. The first communication path A between the first UE and the application device 200 is divided into two sections A1 and A2. The second communication path B between the second UE and the application device 200 is divided into two sections B1 and B2.

For example, the section A1 corresponds to the first RAN section in FIG. 4, and the section A2 corresponds to the first NW section. The section B1 corresponds to the second RAN section, and the section B2 corresponds to the second NW section.

Hereinafter, the section A1 is also referred to as a first wireless section. The section A2 is also referred to as a first wired section. The section B1 is also referred to as a second wireless section. The section B2 is also referred to as a second wired section. Note that, when the first and second wireless sections are not distinguished, they are also simply referred to as wireless sections. When the first and second wired sections are not distinguished, they are also simply referred to as wired sections.

Note that the sections A1, A2, B1, and B2 described above are examples. The sections A1 and A2 only needs to be sections of the first communication path, and the way of sectioning is not limited to the example described above. For example, the section A1 may include a wired section such as a core network. In addition, the section A2 may not include a core network but may include a public network such as the Internet.

The communication path may be divided into a plurality of sections with a router disposed in the middle of the path as a boundary. Furthermore, the communication path can be divided for each function such as (R)AN, a core network (CN), and the Internet. Note that a router is disposed at a boundary between these functions. Accordingly, a communication path may be delimited by several routers of a plurality of routers disposed in the communication path.

In the present embodiment, whether a predetermined section is a common section or a difference section with respect to other sections is classified. The common section is a section in which the delay characteristics (delay time and/or jitter) are substantially the same (for example, the delay difference is less than a predetermined threshold) in two sections (a predetermined section and other sections). The difference section is a section in which the delay characteristics are different (for example, the delay difference is equal to or more than a predetermined threshold) in two sections (a predetermined section and other sections).

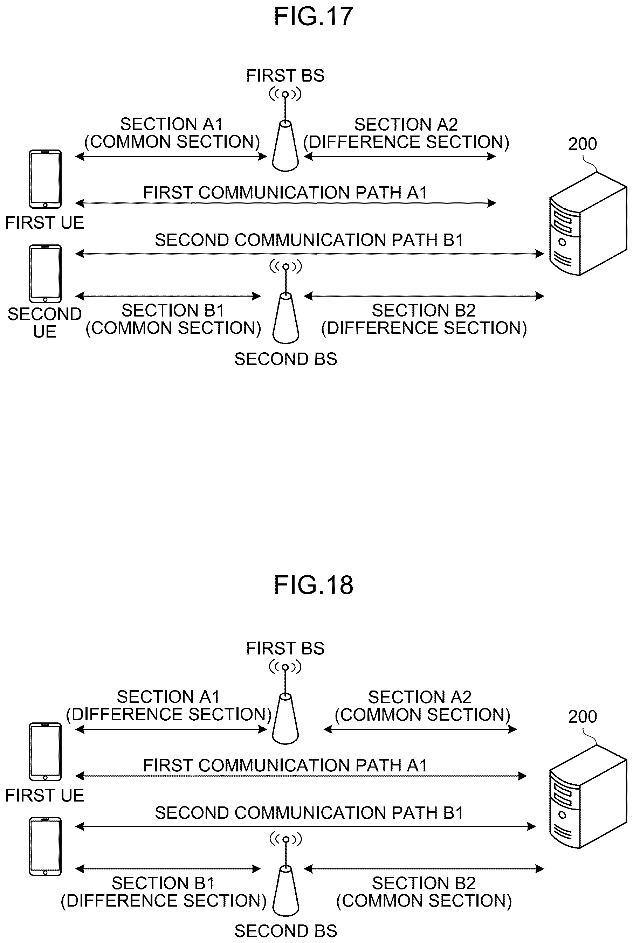

FIGS. 17 and 18 are diagrams for describing an example of a common section and a difference section according to the first embodiment of the present disclosure. FIG. 17 illustrates an example in which the sections A1 and B1 are common sections.

For example, when the performances of the first and second BSs are substantially the same, the delay characteristics of the section A1 and the section B1 can be substantially the same. On the other hand, when the location of the first UE is different from the location of the second UE, the distance (section A2) between the first BS and the application device 200 and the distance (section B2) between the second BS and the application device 200 may be different. In this case, the delay characteristics of the section A2 and the section B2 may be different.

As described above, for example, depending on the performance of the BS, even if the first and second UEs are connected to different BSs, the delay characteristics of the sections A1 and B1 may be substantially the same. In this case, the sections A1 and B1 are common sections.

In addition, the delay characteristics of the sections A2 and B2 may be different depending on the distance between the first and second UEs and the application device 200. In this case, the sections A2 and B2 are difference sections.

On the other hand, FIG. 18 illustrates an example in which the sections A2 and B2 are common sections.

For example, in a case where the distance (section A2) between the first BS and the application device 200 and the distance (section B2) between the second BS and the application device 200 are substantially the same, the delay characteristics of the sections A2 and B2 can be substantially the same.

On the other hand, when the performances of the first and second BSs are different, the delay characteristics of the sections A1 and B1 may be different. For example, even if the core networks to which the first and second BSs are connected are the same, the delay characteristics of the sections A1 and B1 may be different in a case where the setting of the ratio of UL/DL of the first and second BSs is different.

As described above, for example, the delay characteristics of the sections A1 and B1 may be different depending on the performance of the BS even if the first and second UEs are connected to the same core network. In this case, the sections A1 and B1 are difference sections.

Furthermore, the delay characteristics of the sections A2 and B2 may be substantially the same depending on the distance between the first and second UEs and the application device 200. In this case, the sections A2 and B2 are common sections.

Note that, here, it is assumed that one of the wireless section (sections A1 and B1) and the wired section (section A2 and B2) is the common section (or the difference section). However, both the wireless section and the wired section may be common sections. That is, the sections A1 and B1 may be common sections, and the sections A2 and B2 may be common sections. Alternatively, both the wireless section and the wired section may be difference sections. That is, the sections A1 and B1 may be difference sections, and the sections A2 and B2 may be difference sections.

As described above, the application device 200 according to the present embodiment divides each of the communication paths of the first and second UEs into a plurality of sections. The application device 200 divides the communication path by, for example, a function and a router.

The application device 200 grasps whether or not there is a difference in the delay characteristic in each section. For example, the application device 200 acquires the delay characteristic from the information processing device 100 disposed in each of the first and second communication paths to grasp the difference in the delay characteristics between the sections. Here, it is assumed that the information processing device 100 has, for example, a delay measurement function.

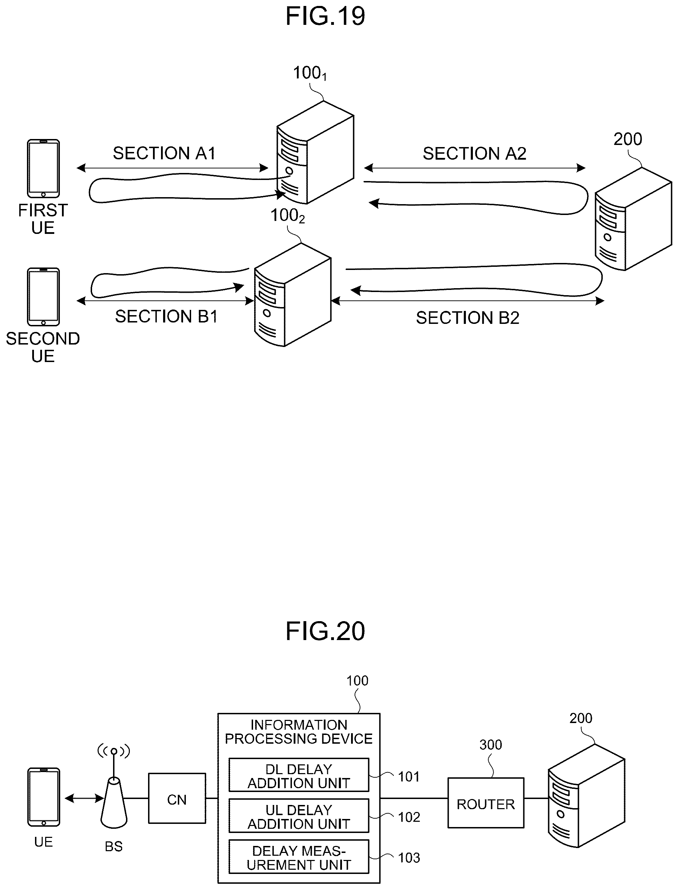

FIG. 19 is a diagram for describing measurement of a delay characteristic by the information processing device 100 according to the first embodiment of the present disclosure.

For example, the information processing device 100 equipped with Linux (registered trademark) transmits a ping of Internet Control Message Protocol (ICMP) and measures the time until a reply is returned, thereby measuring the delay characteristic. In this manner, the information processing device 100 measures the delay characteristic of each section of the communication path using a tool for measuring the delay.

For example, in FIG. 19, an information processing device 100₁ measures delays in the sections A1 and A2 of the first communication path. The information processing device 100₁ measures Turn Around Time in the section A1. Furthermore, the information processing device 100₁ measures Turn Around Time in the section A2. The information processing device 100₁ periodically performs delay measurement and notifies the application device 200 of a measurement result.

For example, an information processing device 100₂ measures delays in the sections B1 and B2 of the second communication path. The information processing device 100₂ measures Turn Around Time in the section B1. Furthermore, the information processing device 100₂ measures Turn Around Time in the section B2. The information processing device 100₂ periodically performs delay measurement and notifies the application device 200 of a measurement result.

On the basis of the measurement result, the application device 200 recognizes which section of the communication path is a common section having a small delay difference from the sections of the other communication paths or a difference section having a large delay difference.

The information processing device 100 having a function of measuring a delay may be arranged at a boundary between the core network and the Internet (alternatively, a virtual private network (VPN)). In this case, the information processing device 100 desirably measures the delay in the section between the core network and the RAN. Furthermore, the information processing device 100 desirably measures a delay of wired communication such as the Internet.

As described above, by arranging the information processing device 100 that measures the delay at the boundary between the core network and the Internet, the number of information processing devices 100 arranged on the communication path can be reduced in some cases. In this case, if one information processing device 100 is arranged for each communication path of each UE, the application device 200 can more reliably grasp the common section and the difference section.

Note that the arrangement of the information processing device 100 that measures the delay is an example, and the information processing device 100 may be arranged at any position on the communication path. Furthermore, the number of the information processing devices 100 is not limited to one, and two or more information processing devices may be arranged.

Here, data (packet) to be subjected to delay measurement by the information processing device 100 is required not to be data transmitted by a scheduled slot used in TSN. The scheduled slot is a slot used to transmit a packet at a predetermined periodic time. The application device 200 can further reduce the influence of the delay by communicating with the UE using the scheduled slot.

The scheduled slot operates the delay time of the packet, and thus the information processing device 100 measures the delay of the packet for which the delay time is not operated by the scheduled slot. In this manner, the information processing device 100 can measure the delay actually generated in the communication path.

Note that, in the example described above, the information processing device 100 measures the delay of each section periodically (predetermined cycle). The information processing device 100 measures the delay in a cycle according to the delay difference of each section. For example, the information processing device 100 can change the measurement frequency (cycle) according to whether the section in which the delay is measured is a common section or a difference section. For example, the information processing device 100 can set the measurement frequency of the delay in the common section to be lower than the measurement frequency of the delay in the difference section. Note that it is assumed that the information processing device 100 acquires, from the application device 200, information indicating whether the section to be measured is a common section or a difference section (alternatively, information regarding the assumed frequency).

When the application device 200 grasps whether each section is a common section or a difference section, the delay characteristics are equalized for each communication path using the scheduled slot. For example, the application device 200 instructs the information processing device 100 having a delay addition function to add a delay to a packet so that the delay characteristics are equalized for each communication path. In this manner, the application device 200 determines the delay to be added according to the delay measurement result of the information processing device 100. Accordingly, the application device 200 updates the delay to be added according to the common section and the difference section. In other words, the application device 200 updates the delay to be added in a cycle according to the delay difference of each section. In accordance with the update of the delay by the application device 200, the information processing device 100 also updates the delay to be added.

FIG. 20 is a diagram for describing an example of delay addition processing by the application device 200 according to the first embodiment of the present disclosure. Note that, although a case where the application device 200 adds a delay in one communication path will be described here, the application device 200 can similarly add a delay in other communication paths.

In FIG. 20, the information processing device 100 is disposed between a core network and a router 300 that connects the core network and the Internet. The information processing device 100 includes a DL delay addition unit 101, a UL delay addition unit 102, and a delay measurement unit 103. The DL delay addition unit 101, the UL delay addition unit 102, and the delay measurement unit 103 can be implemented as, for example, functional blocks of a control unit of the information processing device 100.

The DL delay addition unit 101 has a delay addition function of adding a delay to a DL packet transmitted from the application device 200 to the UE. The UL delay addition unit 102 has a delay addition function of adding a delay to a UL packet transmitted from the UE to the application device 200. As described above, the delay measurement unit 103 has a delay measurement function of periodically measuring a delay.

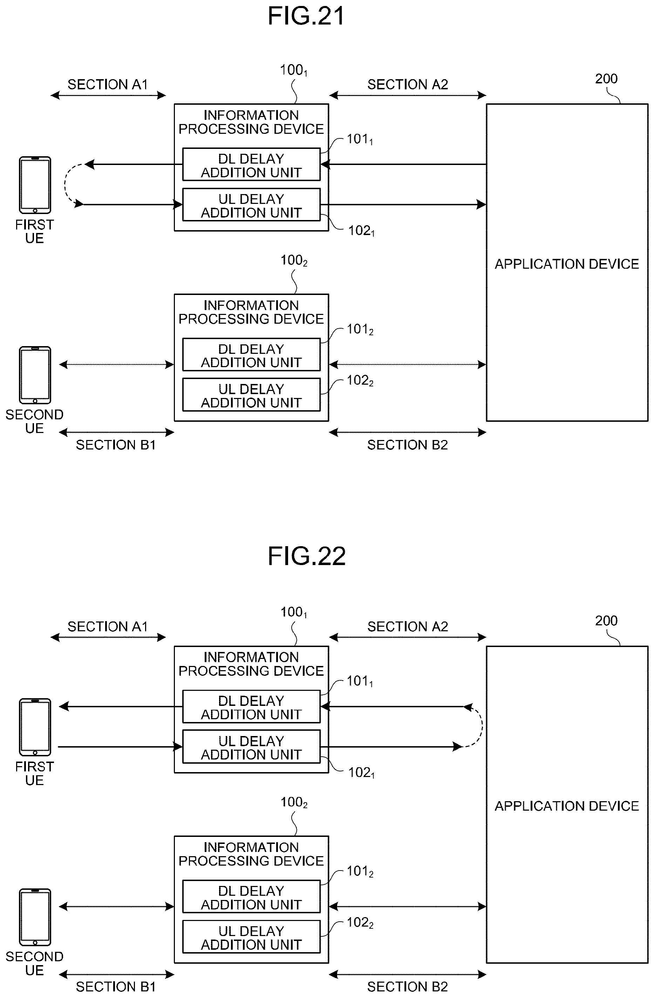

FIG. 21 is a diagram for describing an example of delay addition according to the first embodiment of the present disclosure. FIG. 21 illustrates a case where the application device 200 is an initiator and the UE is a responder. Note that the delay measurement unit 103 of the information processing device 100 is not illustrated in FIG. 21.

Although the information processing devices 100₁ and 100₂ are illustrated in FIG. 21, here, a case where the information processing device 100₁ adds a delay will be described as an example. For example, in a case where the delay of the first communication path between the first UE and the application device 200 is shorter than the delay of the second communication path between the second UE and the application device 200, the application device 200 instructs the information processing device 100₁ to add a delay in order to match the delay of the second communication path.

In the example of FIG. 21, a DL delay addition unit 101₁ of the information processing device 100₁ adds a delay to the DL packet transmitted from the application device 200. For example, the DL delay addition unit 101₁ adds a value (delay amount) corresponding to the delay difference between the section A2 and the section B2 and the delay difference between the section A1 and the section B1 to the DL packet and transmits the DL packet to the first UE.

A UL delay addition unit 102₁ of the information processing device 100₁ adds a delay to the UL packet transmitted from the first UE. For example, the UL delay addition unit 102₁ adds a value corresponding to the delay difference between the section A1 and the section B1 and the delay difference between the section A2 and the section B2 to the UL packet and transmits the UL packet to the application device 200.

FIG. 22 is a diagram for describing another example of delay addition according to the first embodiment of the present disclosure. FIG. 22 illustrates a case where the UE is an initiator and the application device 200 is a responder. Note that the delay measurement unit 103 of the information processing device 100 is not illustrated in FIG. 22.

Although the information processing devices 100₁ and 100₂ are illustrated in FIG. 22, here, a case where the information processing device 100₁ adds a delay will be described as an example. For example, in a case where the delay of the first communication path between the first UE and the application device 200 is shorter than the delay of the second communication path between the second UE and the application device 200, the application device 200 instructs the information processing device 100₁ to add a delay in order to match the delay of the second communication path.

In the example of FIG. 22, the UL delay addition unit 102₁ of the information processing device 100₁ adds a delay to the UL packet transmitted from the first UE. For example, the UL delay addition unit 102₁ adds a value (delay amount) corresponding to the delay difference between the section A1 and the section B1 and the delay difference between the section A2 and the section B2 to the UL packet and transmits the UL packet to the application device 200.

The DL delay addition unit 101₁ of the information processing device 100₁ adds a delay to the DL packet transmitted from application device 200. For example, the DL delay addition unit 101₁ adds a value corresponding to the delay difference between the section A2 and the section B2 and the delay difference between the section A1 and the section B1 to the DL packet and transmits the DL packet to the application device 200.

The information processing device 100₁ receives delay difference information regarding the delay difference between the section A1 and the section B1 and the delay difference between the section A2 and the section B2 from, for example, the application device 200. The information regarding the delay difference is transmitted from the application device 200 to the information processing device 100₁ for each UE. The information processing device 100₁ adds a delay to the packet for each UE.

For example, in a case where the information processing device 100₁ adds a delay to packets addressed to a plurality of UEs, delay difference information regarding the delay difference is transmitted from the application device 200 to the information processing device 100₁ for each of the plurality of UEs. This is because the priority on the scheduler allocated by the BS is different for each UE. Accordingly, the application device 200 transmits delay difference information regarding the delay amount added for each UE to the information processing device 100₁.

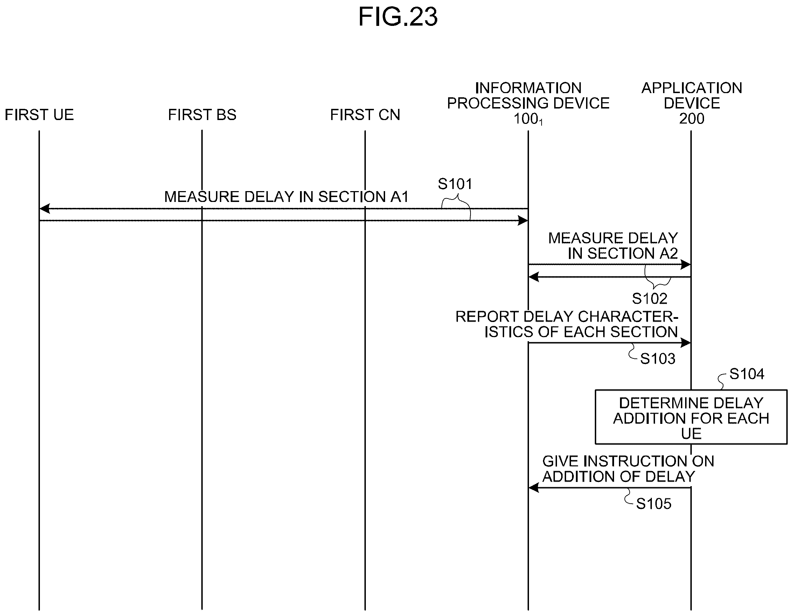

FIG. 23 is a sequence diagram for describing an example of a flow of instruction processing of delay addition according to the first embodiment of the present disclosure. Although FIG. 23 illustrates a case where the application device 200 issues a delay addition instruction to the information processing device 100₁, the application device 200 can similarly transmit the delay instruction to the information processing device 100₂.

First, the information processing device 100₁ performs delay measurement in the section A1 by, for example, transmitting a predetermined data signal (for example, a test signal such as a ping, data including transmission time, and the like) to the first UE and measuring the time until a response is returned (Step S101).

Next, the information processing device 100₁ performs delay measurement in the section A2 by, for example, transmitting a predetermined data signal to the application device 200 and measuring the time until a response is returned (Step S102).

The information processing device 100₁ reports the delay characteristic of each section (here, the sections A1 and A2) to the application device 200 (Step S103).

The application device 200 determines delay addition for each UE on the basis of the delay characteristic of each section acquired from the information processing device 100₁ and the delay characteristic of each section acquired from the information processing device 100₂ (not illustrated) (Step S104). For example, the application device 200 determines the delay amount to be added for each UE on the basis of the delay difference of each section. For example, the application device 200 determines a delay amount to be added for each UL and DL. Here, it is assumed that the application device 200 determines delay addition for the first UE.

In this case, the application device 200 instructs the information processing device 100₁ to add a delay (Step S105). For example, the application device 200 gives an instruction on delay addition by transmitting delay difference information regarding the delay amount added for each UL and DL to the information processing device 100₁.

### <4-1-3. Effects 1-1>

Accordingly, the communication system 1 can further reduce a delay difference between the application device 200 and a plurality of UEs. Furthermore, the communication system 1 can further reduce the delay difference for each section in which the delay has occurred. Thus, the application device 200 does not need to frequently perform delay measurement on the communication path in order to further reduce the delay difference on the communication path. As described above, the information processing device 100 reduces the delay difference for each section, thereby reducing the load on the application device 200. In addition, a load of buffering in the application device 200 is reduced.

### <4-1-4. Problem 1-2>

In the above-described solution 1-1, the information processing device 100₁ measures the delay characteristic for each section. As described above, the delay characteristic is divided into an average delay and a jitter that is a variation in delay. It is desirable that the application device 200 grasp the delay separately for the average delay and the jitter.

In addition, the average delay includes an average delay that is guaranteed to be the same semi-permanently and an average delay that may change due to congestion or the like. It is desirable that the application device 200 separately grasp these average delays. It is desirable that the application device 200 perform optimization of the frequency of delay measurement and optimization of the added delay by differentiating and grasping these average delays and/or the average delay and the jitter.

### <4-1-5. Solution 1-2>

Therefore, here, the application device 200 decomposes and grasps the delay measured in the section into the average delay and the jitter. For example, the information processing device 100 separately measures the average delay and the jitter as the delay characteristic. The application device 200 separately grasps the average delay and the jitter by acquiring information regarding the average delay and the jitter measured from the information processing device 100. The application device 200 recognizes which of the delay and the jitter is different in each section. For example, the application device 200 adjusts the delay for each UE after grasping the maximum value of the delay according to the jitter in consideration of the jitter in each section.

For example, it is assumed that an average delay of the section A1 of the first communication path is 50 ms and a jitter spread is 40 ms (see FIG. 15). In this case, in the section A1, the minimum value of the delay time is 30 ms, and the maximum value is 70 ms.

In this case, the application device 200 adds a delay to a transmission packet so that a delay time of a transmission packet becomes a value corresponding to the maximum value. For example, the application device 200 adds a delay to a transmission packet so that the delay time of the transmission packet becomes a value (here, 90 ms) obtained by adding a value corresponding to the jitter to the maximum value.

In the example of FIG. 15, the maximum delay is 70 ms. Assuming that the value corresponding to the jitter is half the spread of the jitter, the value corresponding to the jitter is 20 ms. In this case, the value corresponding to the maximum value is 70 + 20 = 90 ms.

The application device 200 instructs the information processing device 100 to add a delay so that the delay time of the transmission packet becomes 90 ms. The information processing device 100 adds a delay to each transmission packet in accordance with an instruction from the application device 200.

For example, the information processing device 100 measures a delay time of a transmission packet to which a delay is added. For example, the information processing device 100 acquires the time when the transmission packet is transmitted from a transmission source. The information processing device 100 measures an actual delay time (hereinafter, also referred to as actual delay) until the transmission packet arrives at the information processing device 100 from a difference between the time and the time when the transmission packet is received by the information processing device 100 itself.

The information processing device 100 determines a delay time (hereinafter, also referred to as an additional delay) to be added to the transmission packet according to the measured delay time and the delay time on which an instruction is given from the application device 200. For example, it is assumed that the measured actual delay, that is, the delay time taken for the transmission packet to arrive at the information processing device 100 from the transmission source is 40 ms. In this case, the information processing device 100 adds an additional delay of 90 - 40 = 50 ms to the transmission packet so that the delay time of the transmission packet becomes 90 ms.

Thus, the information processing device 100 can transmit the transmission packet to the transmission destination with a constant delay time regardless of the jitter, and can further reduce the delay difference for each UE.

Furthermore, the information processing device 100 can reduce the influence of jitter by similarly adding an additional delay to a response signal to the transmission packet.

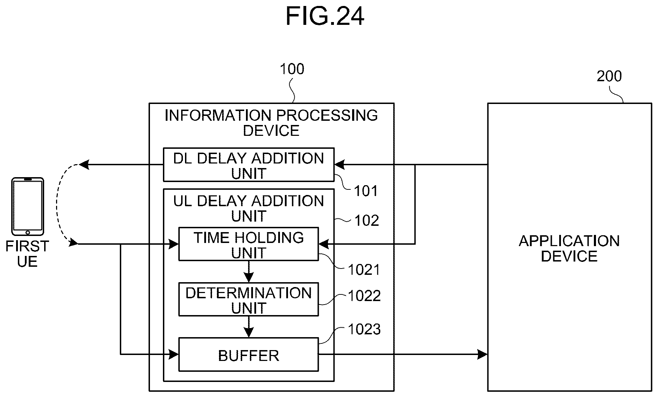

FIG. 24 is a diagram for describing an example of delay addition by the information processing device 100 according to the first embodiment of the present disclosure. FIG. 24 illustrates a case where the application device 200 is an initiator and the UE is a responder. That is, here, the application device 200 sends a transmission packet to the UE, and receives a response packet from the UE. Note that, in FIG. 24, illustration of the delay measurement unit 103 of the information processing device 100 is omitted.

The UL delay addition unit 102 of the information processing device 100 illustrated in FIG. 24 includes a time holding unit 1021, a determination unit 1022, and a buffer 1023.

The time holding unit 1021 holds the first arrival time at which the transmission packet has arrived from the application device 200. The time holding unit 1021 holds the first arrival time for each destination (for example, Destination IP address) of the transmission packet.

The time holding unit 1021 holds the second arrival time at which the response packet arrives from the UE. The time holding unit 1021 holds the second arrival time for each transmission source (for example, source IP address) of the response packet.

The time holding unit 1021 outputs information regarding the held first and second arrival times to the determination unit 1022 together with the corresponding destination or transmission source.

The determination unit 1022 instructs the buffer to transmit the response packet. That is, the determination unit 1022 determines the transmission timing of the response packet. The determination unit 1022 determines the transmission timing of the response packet on the basis of the first and second arrival times.

Specifically, the determination unit 1022 determines the transmission timing of the response packet so that the time from arrival of the transmission packet to transmission of the response packet is constant (for example, 90 ms). In other words, the determination unit 1022 determines the transmission timing of the response packet so that a turn around time (TAT) with the UE is constant.

The buffer 1023 holds the response packet. The buffer 1023 transmits the held response packet to the application device 200 according to the instruction of the determination unit 1022.

As described above, the information processing device 100 measures a round-trip delay with the predetermined UE on the basis of the first arrival time at which the transmission packet addressed to the predetermined UE arrives and the second arrival time at which the response packet from the predetermined UE arrives. The information processing device 100 adds an additional delay corresponding to the measured round-trip delay and jitter to the response packet. Thus, the information processing device 100 can transmit the transmission packet (or the response packet) to the destination with a constant delay time regardless of the jitter.

Here, a method in which the information processing device 100 adds a delay in a case where the application device 200 is an initiator and the UE is a responder has been described. The information processing device 100 can similarly add an additional delay to the transmission packet in a case where the UE is the initiator and the application device 200 is the responder. In this case, the UL delay addition unit 102 adds the additional delay according to the actual delay of the transmission packet.

Note that jitter is likely to occur in the wireless section, but jitter is less likely to occur in the wired section. In other words, the wired section has a low jitter occurrence frequency. Accordingly, it is desirable that the information processing device 100 adds an additional delay for each transmission packet in the wireless section. The information processing device 100 adds an additional delay to each transmission packet in the wireless section so that the delay time of each transmission packet becomes constant. Thus, the information processing device 100 can further reduce the influence of jitter in the wireless section.

In a case where the additional delay is added in the wired section (section of the Internet line), the information processing device 100 may measure the actual delay of the transmission packet on the basis of the time stamp added to the transmission packet.

For example, the information processing device 100 arranged at the exit of the section measures the actual delay of the transmission packet from a difference between a time stamp added to the transmission packet at the entrance of the section and the time (current time) at which the transmission packet arrives. In this manner, the information processing device 100 can measure the actual delay in the section from times when the transmission packet arrives at the entrance and the exit of the section. However, in this case, a change in the format of the packet, such as adding a time stamp, may be required at the entrance.

In addition, the scheduled slot of the TSN is used in a case where the packet arrives at a determined arrival, for example, at a cycle of 100 ms. When the scheduled slot is used, all the packets arrive at a cycle of 100 ms. Accordingly, the scheduled slot is suitable for use in a transmission packet in which an input to a section is performed at regular intervals.

That is, in a case where the transmission packet generated at a constant cycle is transmitted at a more accurate cycle, the application device 200 can further reduce the delay difference for each UE by using the scheduled slot.

On the other hand, the addition of the additional delay by the information processing device 100 has no restriction such as a constant cycle, and can further reduce the delay difference for each UE with respect to the packet transmitted by the application device 200 at any timing.

### <4-1-6. Effects 1-2>

As described above, the application device 200 separately grasps the average delay and the jitter as the delay characteristics, so that the delay difference for each UE due to the jitter can be further reduced. Furthermore, since the information processing device 100 adds the additional delay, the processing load of the application device 200 can be further reduced. In addition, delay times including jitter can be equalized among a plurality of UEs without using a scheduled slot.

The information processing device 100 can further reduce the influence of jitter that is difficult to reduce in the application device 200, and can further reduce the delay difference for each UE.

### <4-1-7. Problem 1-3>

By using the methods of the above-described solutions 1-1 and 1-2, the communication system 1 can make the delay characteristics uniform for each of a plurality of users without greatly changing, that is, the same delay characteristics on a steady basis. On the other hand, the delay characteristic may change unsteadily, that is, dynamically. For example, there is a case where a delay increases as packets accumulate in a buffer at the time of congestion.

As described above, even in a case where the delay characteristic dynamically changes, it is desirable to further reduce the delay difference between the UEs.

### <4-1-8. Solution 1-3>

Therefore, the information processing device 100 according to the present embodiment monitors whether or not the section in which the delay adjustment is performed is nonstationary, and frequently updates the delay characteristic (or measures the delay) in the case of the non-steady state. The monitoring of the non-steady state and the change of the update frequency (or the measurement cycle of the delay) of the delay characteristic are performed by the information processing device 100 having a delay measurement function.

The information processing device 100 changes the monitoring cycle of the delay characteristic between a section in which the possibility of becoming the non-steady state is low and a section in which the possibility of becoming the non-steady state is high. For example, the information processing device 100 shortens the monitoring cycle of the delay characteristic in a section having a high possibility of being in the non-steady state.

For example, it is assumed that the average delay in a normal state is 50 ms. In addition, it is assumed that the information processing device 100 monitors a change in the delay characteristic in 10 s in a normal state. At this time, for example, in a case where the change in the delay characteristic is equal to or more than a first threshold Th1 (for example, 5 ms), the information processing device 100 determines that the state has shifted to the non-steady state, and changes the monitoring cycle (10 s) of the delay characteristic. For example, in a case where the information processing device 100 determines that the steady state has shifted to the non-steady state, the monitoring cycle is shortened from 10 s to 1 s.

On the other hand, the information processing device 100 makes the monitoring cycle of the delay characteristic longer in a section in which the possibility of becoming the non-steady state is low than in a section in which the possibility of becoming the non-steady state is high. For example, the initial value of the monitoring cycle of the delay characteristic is set to, for example, 100 s in the section in which the possibility of becoming the non-steady state is low. For example, in a case where the change in the delay characteristic is equal to or more than the first threshold Th1 in the section in which the possibility of becoming the non-steady state is low, the information processing device 100 determines that the state has shifted to the non-steady state, and changes the monitoring cycle (100 s) of the delay characteristic. For example, in a case where the information processing device 100 determines that the steady state has shifted to the non-steady state, the monitoring cycle is shortened from 100 s to 10 s.

Note that the monitoring cycle of the delay characteristic may change to hysteresis. For example, in a case where the number of times the change in the delay characteristic becomes equal to or less than a second threshold Th2 (for example, 1 ms) exceeds a predetermined number of times in the non-steady state, the information processing device 100 determines that the state has shifted from the non-steady state to the steady state. Upon determining that the non-steady state has shifted to the steady state, the information processing device 100 returns the monitoring cycle of the delay characteristic to the original state. For example, upon determining that the state has shifted to the steady state in the section where the possibility of becoming the non-steady state is low, the information processing device 100 changes the monitoring cycle from 10 s to 100 s.

Here, the information processing device 100 returns (changes) the monitoring cycle to the original cycle at one time, but the method of changing the monitoring cycle is not limited thereto. Upon determining that the non-steady state has shifted to the steady state, the information processing device 100 may gradually restore the monitoring cycle of the delay characteristic to the original cycle. For example, upon determining that the state has shifted to the steady state, the information processing device 100 gradually increases the monitoring cycle from 10 s to 20 ms and 30 ms, and finally returns the monitoring cycle to the original 100 ms.

As described above, the information processing device 100 reports the measured delay characteristic to the application device 200. Therefore, when the monitoring cycle, in other words, the measurement cycle of measuring the delay characteristic changes, the report cycle reported to the application device 200 also changes.

The application device 200 receives a report of the measurement result of the delay characteristic from the information processing device 100 arranged in each communication path. The application device 200 notifies each information processing device 100 of the delay to be added on the basis of these reports. Accordingly, when the delay characteristic changes in any of the plurality of communication paths, the application device 200 changes the delay to be added in accordance with the change and notifies each information processing device 100 of the change.

Since the information processing device 100 reports the measured delay characteristic to the application device 200 according to the change in the delay, the application device 200 can more quickly reduce the delay difference for each UE.

As described above, the information processing device 100 sets, as a detection condition of the non-steady state, detection that the change in the monitored delay is equal to or more than the first threshold Th1. In addition, upon detecting the non-steady state, the information processing device 100 changes the monitoring cycle from the first cycle to the second cycle (first cycle > second cycle). Furthermore, the information processing device 100 changes the delay to be added in accordance with an instruction from the application device 200.

In addition, the information processing device 100 sets, as a detection condition for returning to the steady state, detection that the change in the monitored delay is equal to or less than the second threshold Th2 a predetermined number of times. In addition, upon detecting the return to the steady state, the information processing device 100 changes the monitoring cycle from the second cycle to the first cycle. Furthermore, the information processing device 100 changes the delay to be added in accordance with an instruction from the application device 200.

Note that the information processing device 100 may determine whether the section is a section having a high possibility of becoming the non-steady state or a section having a low possibility of becoming the non-steady state, for example, according to the transition frequency to the non-steady state. For example, the information processing device 100 determines a section in which the frequency of transition to the non-steady state is equal to or more than a threshold as a section having a high possibility of becoming the non-steady state, and sets the monitoring cycle in the steady state to be short (for example, to 10 s). On the other hand, the information processing device 100 determines a section in which the frequency of transition to the non-steady state is less than the threshold as a section in which the possibility of becoming the non-steady state is low, and sets the monitoring cycle in a steady state to be long (for example, 100 s).

In this manner, the information processing device 100 quickly detects that the delay time has suddenly increased in a section where the average delay is normally the same on a steady basis. Furthermore, in a case where the information processing device 100 detects an increase (change) in the delay time, the information processing device shortens the cycle of monitoring the delay characteristic in order to follow the change. Thus, the information processing device 100 can follow the dynamically changing delay characteristic (average delay).

Furthermore, as the information processing device 100 shortens the monitoring cycle of the delay characteristic, the cycle in which the application device 200 adjusts the delay characteristic with another user also shortens. Accordingly, the application device 200 can equalize the delay characteristic between the plurality of users following the change in the delay characteristic in the specific section.

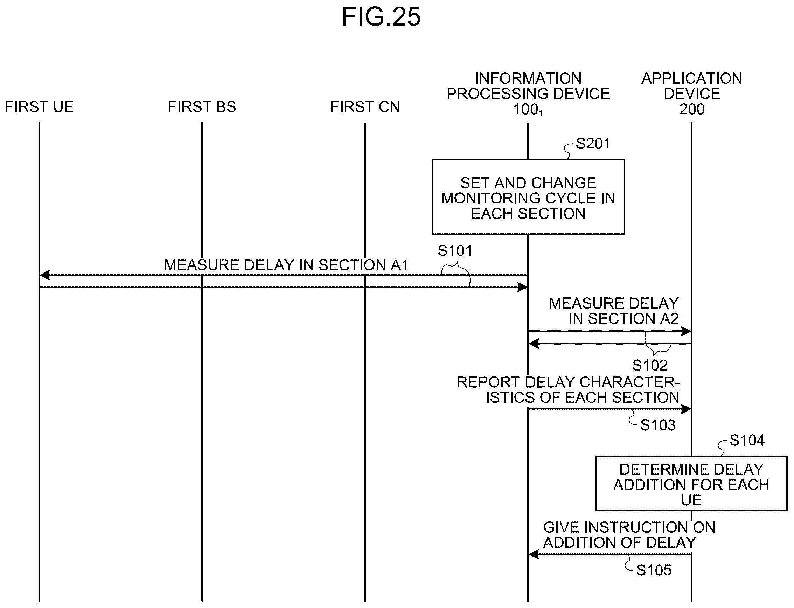

FIG. 25 is a sequence diagram for describing another example of the flow of the instruction processing of delay addition according to the first embodiment of the present disclosure. Although FIG. 25 illustrates a case where the application device 200 issues a delay addition instruction to the information processing device 100₁, the application device 200 can similarly transmit the delay instruction to the information processing device 100₂.

As illustrated in FIG. 25, the information processing device 100₁ sets and changes a monitoring cycle (delay characteristic measurement cycle) for each section (Step S201). The information processing device 100₁ sets the monitoring cycle according to whether it is a section having a high possibility of becoming the non-steady state or a section having a low possibility of becoming the non-steady state. The information processing device 100₁ changes the monitoring cycle according to the change in the delay characteristic.

Note that the subsequent processing is the same as the designation processing illustrated in FIG. 23, and thus description thereof is omitted.

### <4-1-9. Effects 1-3>

In this manner, the information processing device 100 changes the monitoring cycle according to the change in the delay characteristic. For example, the information processing device 100 changes an update cycle of the delay and/or a cycle of measuring the delay (monitoring cycle) according to whether or not the delay fluctuation is equal to or more than a predetermined threshold (for example, first threshold Th1 and second threshold Th2). Thus, in a case where the delay characteristic changes rapidly, the information processing device 100 can follow the change. Furthermore, in a case where the delay characteristic changes rapidly, the application device 200 can quickly equalize the delay characteristic between the users following the change.

### <4-1-10. Problem 1-4>

When a delay is added to the transmission packet, the delay in the entire communication system 1 tends to increase. In addition, there may be a case where the application device 200 wants to add a delay to the transmission packet collectively in a plurality of sections.

In such a case, it may be undesirable for the information processing device 100 to add a delay to the transmission packet in all the sections.

Furthermore, in the above-described solution 1-3, when the delay characteristic dynamically fluctuates, the information processing device 100 adds a delay following the fluctuation. However, in a case where the variation of the delay characteristic is so fast that the information processing device 100 cannot follow the fluctuation, the delay need not be adjusted following the variation.

Furthermore, in a case where the delay difference in each section is small, there is a possibility that the information processing device 100 does not adjust the delay.

Furthermore, in the above-described solution 1-2, the information processing device 100 can adjust jitter and average delay. However, there is a possibility that the information processing device 100 adjusts one of the jitter and the average delay and does not adjust the other.

As described above, it is desirable that the application device 200 can instruct the information processing device 100 to perform delay adjustment according to the situation of the communication system 1 or the like.

### <4-1-11. Solution 1-4>

Therefore, the application device 200 according to the present embodiment gives an instruction on whether or not to add a delay to the transmission packet for each section. The application device 200 may instruct the information processing device 100 to stop adding a delay in a predetermined section. Alternatively, the application device 200 may instruct the information processing device 100 to add a delay of 0 ms in a predetermined section.

Furthermore, the application device 200 can instruct the information processing device 100 to adjust one of the average delay and the jitter in the predetermined section and stop the adjustment of the other. For example, the application device 200 may instruct the information processing device 100 to adjust the average delay in a predetermined section and stop jitter adjustment.

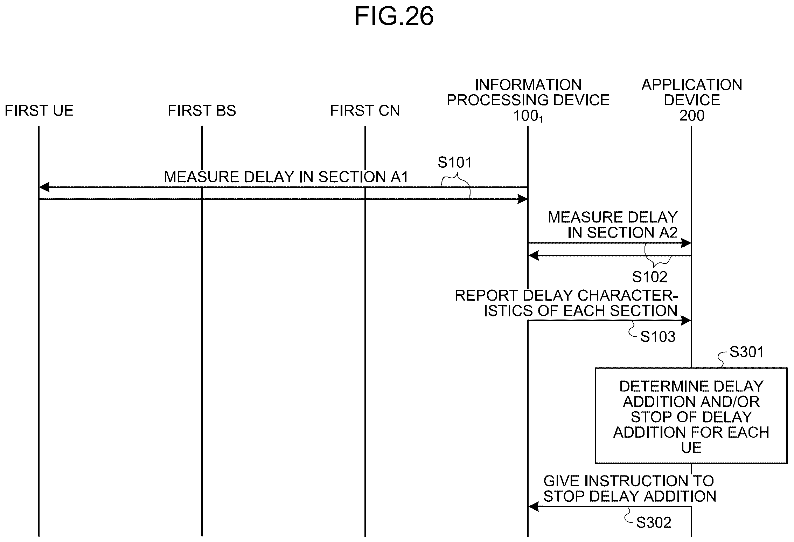

FIG. 26 is a sequence diagram for describing another example of the flow of the instruction processing of delay addition according to the first embodiment of the present disclosure. Although FIG. 26 illustrates a case where the application device 200 issues a delay addition instruction to the information processing device 100₁, the application device 200 can similarly transmit the delay instruction to the information processing device 100₂. In the instruction process illustrated in FIG. 26, the same processes as those in FIG. 23 are denoted by the same reference numerals, and the description thereof will be omitted.

The application device 200 determines delay addition and/or stop of the delay addition for each UE on the basis of the delay characteristic of each section acquired from the information processing device 100₁ and the delay characteristic of each section acquired from the information processing device 100₂ (not illustrated) (Step S301). Here, it is assumed that the application device 200 determines to stop the delay addition to the transmission packet of the first UE.

In this case, the application device 200 instructs the information processing device 100₁ to stop the delay addition (Step S302). The information processing device 100₁ that has received this instruction stops adding a delay to the transmission signal.

Note that the application device 200 may give an instruction to stop the delay addition in both the sections A1 and A2. Alternatively, the application device 200 may give an instruction to stop the delay addition in any one of the sections A1 and A2. In this case, the application device 200 can issue an instruction on the delay addition in a section in which the delay addition is not stopped.

### <4-1-12. Effects 1-4>

As described above, the application device 200 can issue an instruction to stop the delay addition in addition to the instruction to add the delay. Thus, the application device 200 can instruct the information processing device 100 to perform delay adjustment according to the situation of the communication system 1 or the like.

### <4-2. Second embodiment>

Next, an operation of the communication system 1 of a second embodiment will be described.

### <4-2-1. Problem 2-1>

For example, a use case is conceivable in which the client application mounted in each UE simultaneously executes the control designated from the application device 200 arranged on the cloud side at a predetermined time. This can be implemented, for example, by mounting a clock in which the application device 200 and each client application are accurately synchronized in time. This clock can be implemented by a function called synchronization of TSN.

Thus, the communication system 1 can construct a system in which a plurality of UEs cooperates. For example, the client applications mounted on the UE can execute control to the actuators at the same time.

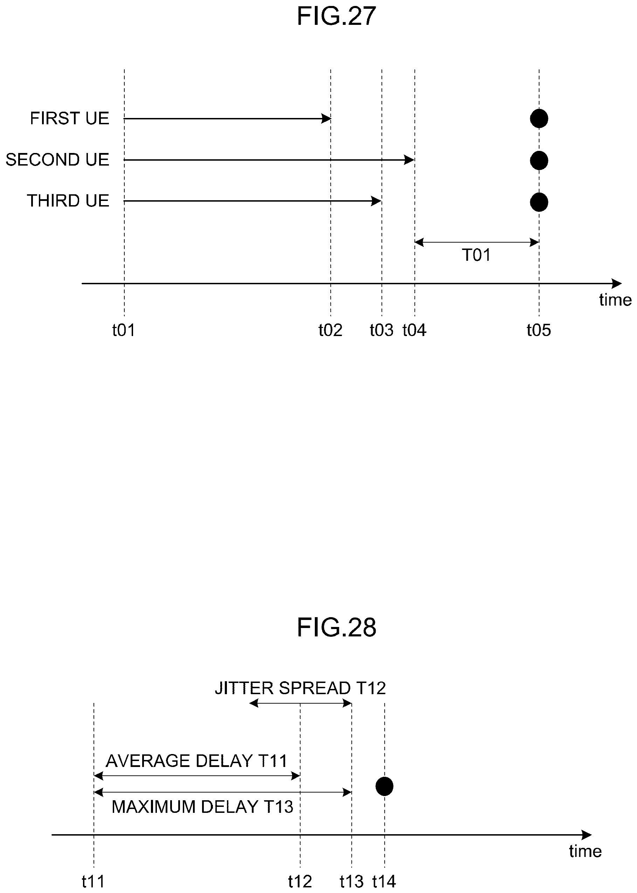

FIG. 27 is a diagram for describing an example of cooperative control by the application device 200.

For example, at time t01, the application device 200 transmits a control signal for executing processing at the same time to the first to third UEs. The first to third UEs have different delay characteristics. In this case, the first to third UEs receive the control signal at different times. For example, in FIG. 27, the first UE receives the control signal at time t02. At time t03, the third UE receives the control signal. At time t04, the second UE receives the control signal.

As described above, even if the time at which each UE receives the control signal varies, the application device 200 sets time t05 at which the processing is executed with a margin, so that each UE can simultaneously execute the processing. In the example of FIG. 27, even if the second UE receives the control signal last, the second UE can execute the processing simultaneously with the first and third UEs at time t05 with a margin of the period T01.

However, in a system that requires a quick response, it is required to shorten a delay time for executing processing. As described above, there is a problem that the execution timing is delayed when the application device 200 determines the execution timing (time t05) to perform the cooperative processing in consideration of the difference between the delay times of the plurality of UEs.

### <4-2-2. Solution 2-1>

Therefore, the application device 200 according to the present embodiment equalizes the delay characteristics between the UEs and determines the execution timing for performing the cooperative processing according to the delay characteristics of the UEs by using the above-described solutions 1-1 to 1-4.

By using the above-described solutions 1-1 to 1-4, the application device 200 can equalize the delay characteristics between the UEs. In addition, the application device 200 acquires delay characteristics (average delay and jitter) for each UE from the information processing device 100. Accordingly, the application device 200 can determine the execution timing to perform the cooperative processing according to the delay characteristic, and can set the execution timing at an earlier time.

FIG. 28 is a diagram for describing an example of cooperative control by the application device 200 according to the second embodiment of the present disclosure. Note that, here, it is assumed that delay characteristics of a plurality of UEs are uniform by the application device 200. Accordingly, in FIG. 28, an example of cooperative control will be described focusing on one UE.

As described above, since the delay characteristics of the plurality of UEs are the same, the control signal transmitted by the application device 200 at time t11 arrives at the UE at time t12 after the average delay T11 on average. Assuming that the spread of the jitter is T12, the maximum delay T13 is T11 + T12/2. That is, the UE can receive the control signal by time t13 after the maximum delay T13 at the latest.

The application device 200 can grasp the time when the control signal arrives at the UE. Therefore, the application device 200 sets the execution timing to perform the cooperative processing at time t14 immediately after time t13 at which the UE receives the control signal at the latest. The UE performs enhancement processing (that is, processing based on the control signal) according to the control signal at time t24.

Thus, the application device 200 can further shorten the delay time of the execution timing at which the cooperative control is performed.

Note that, as described above, the method in which the application device 200 sets the execution timing by using the time-synchronized clock (hereinafter, also referred to as a first setting method) has an advantage that a plurality of UEs can more reliably execute the cooperative processing at the same time.

On the other hand, the first setting method has a disadvantage that the execution timing may be delayed. In addition, depending on the UE, the control signal is received quickly. In this way, the UE that has received the control signal early needs to buffer the control signal unnecessarily long.

In addition, in a case where there is a possibility that the UE that has received information such as a control signal early executes processing early due to fraud, it is desirable that a plurality of UEs simultaneously receive the information. For example, there is a concern that a malicious UE performs fraud in a case where it is advantageous to perform processing early, such as a game. In such a case, it is desirable that a plurality of UEs receive information at the same timing.

In addition to the first setting method, for example, a method in which, in a case where the delay times of the UEs can be equalized, the application device 200 simultaneously transmits a control signal, and each UE executes processing as soon as it receives the control signal (hereinafter, also described as a second setting method). In the case of the second setting method, the application device 200 and the UE do not need to have time-synchronized clocks. In addition, each UE can perform cooperative processing almost simultaneously with a minimum delay.

However, as described above, the delay characteristics include an average delay and a jitter. Accordingly, even if the delay times of the UEs are equalized to some extent, there is a possibility that a slight variation occurs in the delay time of each UE due to an influence of jitter or the like, for example.

Therefore, the application device 200 according to the present embodiment sets the execution timing of processing by each UE in consideration of the influence of jitter or the like while equalizing the delay times of the UEs. Hereinafter, this setting method is also referred to as a third setting method. In the third setting method, the application device 200 equalizes the delay times of the UEs and sets the execution timing of the processing using the time-synchronized clock.

Thus, each UE can execute processing at the same time more reliably. In addition, the application device 200 can set an earlier execution timing, and can further reduce the processing execution delay.

In addition, since the application device 200 equalizes the delay times of the UEs, it is difficult for the control signal to arrive at the UE too early. Accordingly, fraud by the UE can be prevented. Thus, the application device 200 does not need to monitor fraud of the UE, and a processing load of the application device 200 can be further reduced.

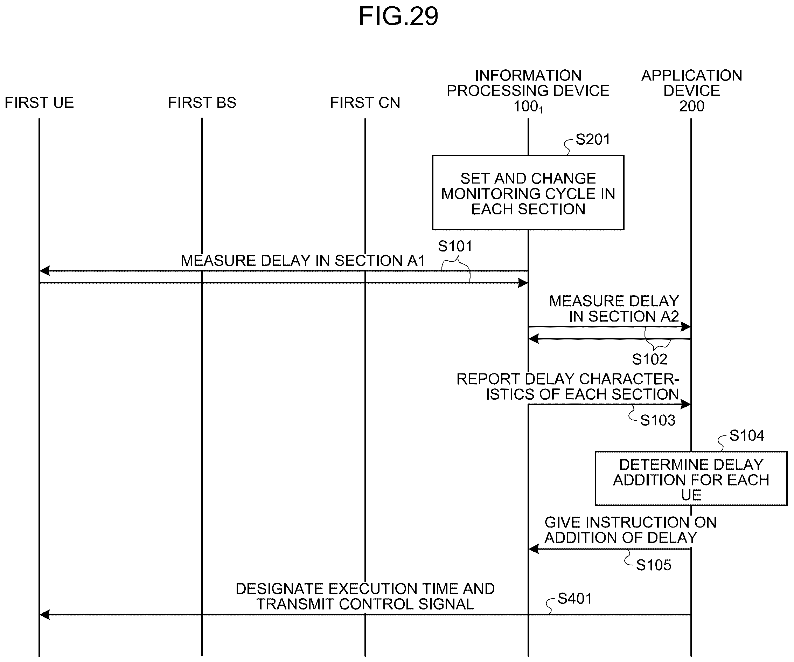

FIG. 29 is a sequence diagram for describing an example of a flow of cooperative control processing according to the second embodiment of the present disclosure. Although FIG. 29 illustrates a case where the application device 200 performs cooperative control on the first UE, the application device 200 can also perform cooperative control on the second and third UEs in a similar manner. Note that, in the processing of FIG. 29, the same components as those of the processing illustrated in FIG. 25 are denoted by the same reference numerals, and description thereof is omitted.

By instructing the information processing device 100₁ to add the delay in Step S105, the application device 200 in which the delays of the UEs are equalized designates the execution time and transmits the control signal to the first UE (Step S401). Here, the execution time is set by the application device 200 on the basis of the time when the control signal arrives at each UE. Furthermore, a delay is added to the control signal by the information processing device 100₁. Accordingly, the control signal arrives at each UE at substantially the same time.

### <4-2-3. Effects 2-1>

As described above, the application device 200 according to the present embodiment equalizes the delays of the UEs and transmits packets to the UEs by specifying the execution time. Thus, the application device 200 can further reduce the packet execution delay. In addition, the application device 200 can further reduce the variation in the arrival time of the packets to the UEs.

### <4-2-4. Problem 2-2>

For example, in a case where the delay characteristics (the average delay and the jitter) of the UEs fluctuate, there is a case where it is difficult for the application device 200 to set the packet execution time even if the delay characteristics of the UEs are equalized. For example, in a case where the delay characteristic dynamically fluctuates, there is a possibility that the packet does not reach the UE by the execution time set by the application device 200.

### <4-2-5. Solution 2-2>

Therefore, in a case where the delay characteristic dynamically fluctuates, the application device 200 according to the present embodiment sets the packet execution time (execution timing) so that the packet is executed at a predetermined interval after the packet arrives at the UE.

For example, the application device 200 increases the predetermined interval as the fluctuation in the delay characteristic increases. For example, in FIG. 28, the application device 200 increases the interval (predetermined interval) between time t12 and time t13 as the fluctuation of the delay characteristic increases.

Thus, each UE can execute processing at the same time more reliably regardless of the delay fluctuation.

In addition, as another method, the application device 200 may switch between a case where the execution timing is not designated and a case where the execution timing is designated. For example, the application device 200 transmits a packet by switching between the second setting method and the third setting method described above.

For example, in a steady state in which the fluctuation of the delay characteristic is small, the application device 200 equalizes the delay characteristic of each UE, designates the execution time, and transmits the packet. That is, the application device 200 performs the cooperative control of each UE by using the third setting method in the steady state. In this case, after receiving the packet, the UE executes processing based on the packet before a specified execution time.

On the other hand, in the non-steady state in which the delay characteristic dynamically fluctuates, the application device 200 equalizes the delay characteristic of each UE, but transmits the packet without specifying the execution time. In this case, the UE executes the packet as soon as the packet is received. That is, the application device 200 performs cooperative control of each UE by using the second setting method in the non-steady state. In this case, the UE performs packet-based processing after receiving the packet.

The application device 200 may explicitly notify the UE which of the second and third setting methods is to be used. Alternatively, the application device 200 may implicitly notify the UE which of the second and third setting methods is to be used depending on whether the execution time is included in the packet. In this case, when the packet does not include the execution time, the UE determines that the cooperative control is performed in the second setting method. When the execution time is included in the packet, the UE determines that the cooperative control is performed by the third setting method.

### <4-2-6. Effects 2-2>

As described above, the application device 200 according to the present embodiment sets the execution time with a margin according to the fluctuation in the delay characteristic. Alternatively, the application device 200 switches the method (mode) of the cooperative control according to the fluctuation in the delay characteristic.

Thus, the application device 200 can perform the cooperative control of the UE more reliably even in a case where the fluctuation of the delay characteristic is large.

### <<5. Other embodiments>>

The above-described embodiments are examples, and various modifications and applications are possible.

For example, in the above-described embodiment, the TSN is applied to the communication system 1, but the TSN need not be applied. A network technology other than the TSN may be applied to the communication system 1.

Furthermore, in the above-described embodiment, the information processing device 100 performs both the measurement of the delay characteristic and the addition of the delay, but the information processing device 100 need not perform the both. For example, the information processing device that measures the delay characteristic and the information processing device that adds the delay may be separate devices.

Furthermore, in the above-described embodiment, the application device 200 performs both the provision of the service to the UE and the determination of the delay addition to the transmission packet, but a device other than the application device 200 may determine the delay addition to the transmission packet. In this case, for example, the communication system 1 may further include a device (for example, the information processing device) that determines delay addition to the transmission packet.

A control device that controls the information processing device 100, the application device 200, and the UE (terminal device 30) of the present embodiment may be implemented by a dedicated computer system or a general-purpose computer system.

For example, a communication program for executing the above-described operation is stored and distributed in a computer-readable recording medium such as an optical disk, a semiconductor memory, a magnetic tape, or a flexible disk. Then, for example, by installing the program in a computer and executing the above-described processing, the control device can be configured. At this time, the control device may be the information processing device 100, the application device 200, or a device outside the UE (for example, a personal computer). Furthermore, the control device may be a device (for example, the control unit) inside the information processing device 100, the application device 200, or the UE.

In addition, the communication program may be stored in a disk device included in a server device on a network such as the Internet so that the communication program can be downloaded to a computer. Furthermore, the above-described functions may be implemented by cooperation of an operating system (OS) and application software. In this case, a portion other than the OS may be stored in a medium and distributed, or a portion other than the OS may be stored in a server device, and downloading to a computer, or the like can be performed.

In addition, among the processes described in the above embodiments, all or part of the processes described as being performed automatically can be performed manually, or all or part of the processes described as being performed manually can be performed automatically by a publicly known method. Further, the processing procedure, specific name, and information including various data and parameters illustrated in the above document and the drawings can be optionally changed unless otherwise specified. For example, the various types of information illustrated in each figure are not limited to the illustrated information.

Further, each component of each device illustrated in the drawings is functionally conceptual, and is not necessarily physically configured as illustrated in the drawings. That is, a specific form of distribution and integration of each device is not limited to the illustrated form, and all or a part thereof can be functionally or physically distributed and integrated in any unit according to various loads, usage conditions, and the like. Note that this configuration by distribution and integration may be performed dynamically.

Further, the above-described embodiments can be appropriately combined in a region in which the processing contents do not contradict each other. Furthermore, the order of each step illustrated in the flowchart of the above-described embodiment can be appropriately changed.

Furthermore, for example, the present embodiment can be implemented as any configuration constituting a device or a system, for example, a processor as a system large scale integration (LSI) or the like, a module using a plurality of processors or the like, a unit using a plurality of modules or the like, a set obtained by further adding other functions to a unit, or the like (that is, a configuration of a part of the device).

Note that, in the present embodiment, the system means a set of a plurality of components (devices, modules (parts), and the like), and it does not matter whether or not all the components are in the same housing. Therefore, a plurality of devices housed in separate housings and connected via a network and one device in which a plurality of modules is housed in one housing are both systems.

In addition, for example, the present embodiment can employ a configuration of cloud computing in which one function is shared and processed by a plurality of devices in cooperation via a network.

### <<6. Conclusion>>

Although the embodiments of the present disclosure have been described above, the technical scope of the present disclosure is not limited to the above-described embodiments as it is, and various modifications can be made without departing from the gist of the present disclosure. In addition, components of different embodiments and modification examples may be appropriately combined.

In addition, the effects in the embodiments described in the present description are merely examples and are not limited, and other effects may be provided.

Note that the present technology can also have the following configurations.
(1) An information processing device comprising:
   a control unit that adds an additional delay to a transmission signal to be transmitted to a first terminal device and/or an application device according to a first difference between a first RAN delay characteristic and a second RAN delay characteristic and/or a second difference between a first NW delay characteristic and a second NW delay characteristic, wherein
   the first RAN delay characteristic is a delay characteristic in a first RAN section including at least a first (Radio) Access Network ((R)AN) in a first communication path including the first terminal device, the first (R)AN (Radio Access Network), a first CN (Core Network), and the application device,
   the second RAN delay characteristic is a delay characteristic in a second RAN section including at least a second (R)AN in a second communication path including a second terminal device, the second (R)AN, a second CN, and the application device,
   the first NW delay characteristic is a delay characteristic in a first NW section including at least a part of a path excluding the first (R)AN in the first communication path, and
   the second NW delay characteristic is a delay characteristic in a second NW section including at least a part of a path excluding the second (R)AN in the second communication path.
(2) The information processing device according to (1), wherein the information processing device is disposed in the first CN or at a position closer to the first CN than the application device.
(3) The information processing device according to (2), in which the information processing device is arranged at a boundary between the first CN and a network that connects the first CN and the application device.
(4) (Update changed by common/difference 0221 FIG. 19) The information processing device according to any one of (1) to (3), in which the control unit updates the additional delay at a cycle according to the first difference and/or the second difference.
(5) The information processing device according to any one of (1) to (4), in which the control unit changes the update cycle of the additional delay according to whether or not fluctuation of the delay in the first RAN section and/or the first NW section is larger than a predetermined threshold.
(6) The information processing device according to any one of (1) to (5), wherein the control unit measures the first RAN delay characteristic and/or the first NW delay characteristic.
(7) The information processing device according to (6), wherein the control unit measures the first RAN delay characteristic and/or the first NW delay characteristic at a cycle according to the first difference and/or the second difference.
(8) The information processing device according to (6) or (7), wherein the control unit changes a cycle of measuring the first RAN delay characteristic and/or the first NW delay characteristic according to whether or not fluctuation in delay in the first RAN section and/or the first NW section is equal to or more than a predetermined threshold.
(9) The information processing device according to any one of (6) to (8), in which the control unit measures an average delay and variation in delay in the first RAN section as the first RAN delay characteristic, and measures the average delay and the variation in the delay in the first NW section as the first NW delay characteristic.
(10) The information processing device according to any one of (1) to (9), wherein the control unit adds the delay to the transmission signal according to variation in delay between the first RAN section and the second RAN section and/or the variation in delay between the first NW section and the second NW section.
(11) The information processing device according to any one of (1) to (10), wherein the control unit measures a round-trip delay with the first terminal device on a basis of a first time at which a first transmission signal transmitted to the first terminal device has arrived and a second time at which a second transmission signal transmitted by the first terminal device has arrived, and adds the additional delay corresponding to the round-trip delay and variation in delay between the first RAN section and the second RAN section to the second transmission signal.
(12) The information processing device according to any one of (1) to (11), wherein the control unit stops the addition of the additional delay in a case of receiving an instruction to stop addition of the additional delay to the transmission signal.
(13) The information processing device according to any one of (1) to (12), wherein the control unit adds the additional delay to the transmission signal for which an execution time is designated.
(14) The information processing device according to any one of (1) to (13), wherein
   the control unit adds the additional delay to the transmission signal according to the first difference of the first RAN delay characteristic, the second RAN delay characteristic, and a third RAN delay characteristic and/or the second difference of the first NW delay characteristic, the second NW delay characteristic, and the third NW delay characteristic,
   the third RAN delay characteristic is a delay characteristic in a third RAN section including at least a third (R)AN in a third communication path including a third terminal device, the third (R)AN, a third CN, and the application device, and
   the third NW delay characteristic is a delay characteristic in a third NW section including at least a part of a path excluding the third (R)AN in the third communication path.
(15) The information processing device according to any one of (1) to (14), wherein
   the control unit adds the additional delay to the transmission signal according to a third difference between a third NW delay characteristic and a fourth NW delay characteristic,
   the third NW delay characteristic is a delay characteristic in a third NW section including at least a part of a path excluding the first RAN section and the first NW section in the first communication path, and
   the fourth NW delay characteristic is a delay characteristic in a fourth NW section including at least a part of a path excluding the second RAN section and the second NW section in the second communication path.
(16) A terminal device comprising:
   a communication unit that receives a transmission signal to which an additional delay is added according to a first difference between a first RAN delay characteristic and a second RAN delay characteristic and/or a second difference between a first NW delay characteristic and a second NW delay characteristic, wherein
   the first RAN delay characteristic is a delay characteristic in a first RAN section including at least a first (R)AN in a first communication path including a terminal device, the first (R)AN, a first CN, and an application device,
   the second RAN delay characteristic is a delay characteristic in a second RAN section including at least a second (R)AN in a second communication path including a second terminal device, the second (R)AN, a second CN, and the application device,
   the first NW delay characteristic is a delay characteristic in a first NW section including at least a part of a path excluding the first (R)AN in the first communication path, and
   the second NW delay characteristic is a delay characteristic in a second NW section including at least a part of a path excluding the second (R)AN in the second communication path.
(17) The terminal device according to (16), further comprising a control unit that executes processing based on the transmission signal at an execution time in a case where the execution time of the transmission signal is designated.
(18) The terminal device according to (17), wherein the control unit performs the processing after receiving the transmission signal in a case where the execution time of the transmission signal is not designated, and performs the processing after waiting for the execution time after receiving the transmission signal in a case where the execution time is designated.
(19) A base station comprising:
   a communication unit that transmits a transmission signal to which an additional delay according to a first difference between a first RAN delay characteristic and a second RAN delay characteristic and/or a second difference between a first NW delay characteristic and a second NW delay characteristic is added to a first terminal device and/or an application device, wherein
   the first RAN delay characteristic is a delay characteristic in a first RAN section including at least a first (R)AN in a first communication path including the first terminal device, the first (R)AN, a first CN, and the application device,
   the second RAN delay characteristic is a delay characteristic in a second RAN section including at least a second (R)AN in a second communication path including a second terminal device, the second (R)AN, a second CN, and the application device,
   the first NW delay characteristic is a delay characteristic in a first NW section including at least a part of a path excluding the first (R)AN in the first communication path, and
   the second NW delay characteristic is a delay characteristic in a second NW section including at least a part of a path excluding the second (R)AN in the second communication path.
(20) A communication system comprising:
   a first terminal device;
   an application device that communicates with the first terminal device;
   a base station that transmits a transmission signal to the first terminal device and/or the application device; and
   an information processing device including a control unit that adds an additional delay to the transmission signal according to a first difference between a first RAN delay characteristic and a second RAN delay characteristic and/or a second difference between a first NW delay characteristic and a second NW delay characteristic, wherein
   the first RAN delay characteristic is a delay characteristic in a first RAN section including at least a first (R)AN in a first communication path including a first terminal device, the first (R)AN, a first CN, and the application device,
   the second RAN delay characteristic is a delay characteristic in a second RAN section including at least a second (R)AN in a second communication path including a second terminal device, the second (R)AN, a second CN, and the application device,
   the first NW delay characteristic is a delay characteristic in a first NW section including at least a part of a path excluding the first (R)AN in the first communication path, and
   the second NW delay characteristic is a delay characteristic in a second NW section including at least a part of a path excluding the second (R)AN in the second communication path.
(21) An information processing method comprising:
   adding an additional delay to a transmission signal to be transmitted to a first terminal device and/or an application device according to a first difference between a first RAN delay characteristic and a second RAN delay characteristic and/or a second difference between a first NW delay characteristic and a second NW delay characteristic, wherein
   the first RAN delay characteristic is a delay characteristic in a first RAN section including at least a first (R)AN in a first communication path including the first terminal device, the first (R)AN,
   a first CN, and the application device,
   the second RAN delay characteristic is a delay characteristic in a second RAN section including at least a second (R)AN in a second communication path including a second terminal device, the second (R)AN, a second CN, and the application device,
   the first NW delay characteristic is a delay characteristic in a first NW section including at least a part of a path excluding the first (R)AN in the first communication path, and
   the second NW delay characteristic is a delay characteristic in a second NW section including at least a part of a path excluding the second (R)AN in the second communication path.
(22) A communication method comprising:
   receiving, by a terminal device, a transmission signal to which an additional delay is added according to a first difference between a first RAN delay characteristic and a second RAN delay characteristic and/or a second difference between a first NW delay characteristic and a second NW delay characteristic, wherein
   the first RAN delay characteristic is a delay characteristic in a first RAN section including at least a first (R)AN in a first communication path including the terminal device, the first (R)AN, a first CN, and an application device,
   the second RAN delay characteristic is a delay characteristic in a second RAN section including at least a second (R)AN in a second communication path including a second terminal device, the second (R)AN, a second CN, and the application device,
   the first NW delay characteristic is a delay characteristic in a first NW section including at least a part of a path excluding the first (R)AN in the first communication path, and
   the second NW delay characteristic is a delay characteristic in a second NW section including at least a part of a path excluding the second (R)AN in the second communication path.
(23) A communication method comprising:
   transmitting a transmission signal to which an additional delay according to a first difference between a first RAN delay characteristic and a second RAN delay characteristic and/or a second difference between a first NW delay characteristic and a second NW delay characteristic is added to a first terminal device and/or an application device, wherein
   the first RAN delay characteristic is a delay characteristic in a first RAN section including at least a first (R)AN in a first communication path including the first terminal device, the first (R)AN, a first CN, and the application device,
   the second RAN delay characteristic is a delay characteristic in a second RAN section including at least a second (R)AN in a second communication path including a second terminal device, the second (R)AN, a second CN, and the application device,
   the first NW delay characteristic is a delay characteristic in a first NW section including at least a part of a path excluding the first (R)AN in the first communication path, and
   the second NW delay characteristic is a delay characteristic in a second NW section including at least a part of a path excluding the second (R)AN in the second communication path.
(24) A communication method in a communication system including a first terminal device, an application device that communicates with the first terminal device, a base station that transmits a transmission signal to the first terminal device and/or the application device, and an information processing device, the communication method comprising:
   by the information processing device,
   adding an additional delay to the transmission signal according to a first difference between a first RAN delay characteristic and a second RAN delay characteristic and/or a second difference between a first NW delay characteristic and a second NW delay characteristic, wherein
   the first RAN delay characteristic is a delay characteristic in a first RAN section including at least a first (R)AN in a first communication path including a first terminal device, the first (R)AN, a first CN, and the application device,
   the second RAN delay characteristic is a delay characteristic in a second RAN section including at least a second (R)AN in a second communication path including a second terminal device, the second (R)AN, a second CN, and the application device,
   the first NW delay characteristic is a delay characteristic in a first NW section including at least a part of a path excluding the first (R)AN in the first communication path, and
   the second NW delay characteristic is a delay characteristic in a second NW section including at least a part of a path excluding the second (R)AN in the second communication path.

### Reference Signs List

1 COMMUNICATION SYSTEM
10 MANAGEMENT DEVICE
11, 41, 51 COMMUNICATION UNIT
12, 22, 32, 42, 52 STORAGE UNIT
13, 23, 33, 43, 53 CONTROL UNIT
20 BASE STATION
21, 31 WIRELESS COMMUNICATION UNIT
30 TERMINAL DEVICE
40 NETWORK MANAGEMENT DEVICE
50 COMMUNICATION DEVICE
100 INFORMATION PROCESSING DEVICE
200 APPLICATION DEVICE

## Claims

1. An information processing device comprising:
a control unit that adds an additional delay to a transmission signal to be transmitted to a first terminal device and/or an application device according to a first difference between a first RAN delay characteristic and a second RAN delay characteristic and/or a second difference between a first NW delay characteristic and a second NW delay characteristic, wherein
the first RAN delay characteristic is a delay characteristic in a first RAN section including at least a first (Radio) Access Network ((R)AN) in a first communication path including the first terminal device, the first (R)AN (Radio Access Network), a first CN (Core Network), and the application device,
the second RAN delay characteristic is a delay characteristic in a second RAN section including at least a second (R)AN in a second communication path including a second terminal device, the second (R)AN, a second CN, and the application device,
the first NW delay characteristic is a delay characteristic in a first NW section including at least a part of a path excluding the first (R)AN in the first communication path, and
the second NW delay characteristic is a delay characteristic in a second NW section including at least a part of a path excluding the second (R)AN in the second communication path.

2. The information processing device according to claim 1, wherein the information processing device is disposed in the first CN or at a position closer to the first CN than the application device.

3. The information processing device according to claim 1, wherein the control unit measures the first RAN delay characteristic and/or the first NW delay characteristic.

4. The information processing device according to claim 3, wherein the control unit measures the first RAN delay characteristic and/or the first NW delay characteristic at a cycle according to the first difference and/or the second difference.

5. The information processing device according to claim 3, wherein the control unit changes a cycle of measuring the first RAN delay characteristic and/or the first NW delay characteristic according to whether or not fluctuation in delay in the first RAN section and/or the first NW section is equal to or more than a predetermined threshold.

6. The information processing device according to claim 1, wherein the control unit adds the delay to the transmission signal according to variation in delay between the first RAN section and the second RAN section and/or the variation in delay between the first NW section and the second NW section.

7. The information processing device according to claim 1, wherein the control unit measures a round-trip delay with the first terminal device on a basis of a first time at which a first transmission signal transmitted to the first terminal device has arrived and a second time at which a second transmission signal transmitted by the first terminal device has arrived, and adds the additional delay corresponding to the round-trip delay and variation in delay between the first RAN section and the second RAN section to the second transmission signal.

8. The information processing device according to claim 1, wherein the control unit stops the addition of the additional delay in a case of receiving an instruction to stop addition of the additional delay to the transmission signal.

9. The information processing device according to claim 1, wherein the control unit adds the additional delay to the transmission signal for which an execution time is designated.

10. The information processing device according to claim 1, wherein
the control unit adds the additional delay to the transmission signal according to the first difference of the first RAN delay characteristic, the second RAN delay characteristic, and a third RAN delay characteristic and/or the second difference of the first NW delay characteristic, the second NW delay characteristic, and the third NW delay characteristic,
the third RAN delay characteristic is a delay characteristic in a third RAN section including at least a third (R)AN in a third communication path including a third terminal device, the third (R)AN, a third CN, and the application device, and
the third NW delay characteristic is a delay characteristic in a third NW section including at least a part of a path excluding the third (R)AN in the third communication path.

11. The information processing device according to claim 1, wherein
the control unit adds the additional delay to the transmission signal according to a third difference between a third NW delay characteristic and a fourth NW delay characteristic,
the third NW delay characteristic is a delay characteristic in a third NW section including at least a part of a path excluding the first RAN section and the first NW section in the first communication path, and
the fourth NW delay characteristic is a delay characteristic in a fourth NW section including at least a part of a path excluding the second RAN section and the second NW section in the second communication path.

12. A terminal device comprising:
a communication unit that receives a transmission signal to which an additional delay is added according to a first difference between a first RAN delay characteristic and a second RAN delay characteristic and/or a second difference between a first NW delay characteristic and a second NW delay characteristic, wherein
the first RAN delay characteristic is a delay characteristic in a first RAN section including at least a first (R)AN in a first communication path including a terminal device, the first (R)AN, a first CN, and an application device,
the second RAN delay characteristic is a delay characteristic in a second RAN section including at least a second (R)AN in a second communication path including a second terminal device, the second (R)AN, a second CN, and the application device,
the first NW delay characteristic is a delay characteristic in a first NW section including at least a part of a path excluding the first (R)AN in the first communication path, and
the second NW delay characteristic is a delay characteristic in a second NW section including at least a part of a path excluding the second (R)AN in the second communication path.

13. The terminal device according to claim 12, further comprising a control unit that executes processing based on the transmission signal at an execution time in a case where the execution time of the transmission signal is designated.

14. The terminal device according to claim 13, wherein the control unit performs the processing after receiving the transmission signal in a case where the execution time of the transmission signal is not designated, and performs the processing after waiting for the execution time after receiving the transmission signal in a case where the execution time is designated.

15. A base station comprising:
a communication unit that transmits a transmission signal to which an additional delay according to a first difference between a first RAN delay characteristic and a second RAN delay characteristic and/or a second difference between a first NW delay characteristic and a second NW delay characteristic is added to a first terminal device and/or an application device, wherein
the first RAN delay characteristic is a delay characteristic in a first RAN section including at least a first (R)AN in a first communication path including the first terminal device, the first (R)AN, a first CN, and the application device,
the second RAN delay characteristic is a delay characteristic in a second RAN section including at least a second (R)AN in a second communication path including a second terminal device, the second (R)AN, a second CN, and the application device,
the first NW delay characteristic is a delay characteristic in a first NW section including at least a part of a path excluding the first (R)AN in the first communication path, and
the second NW delay characteristic is a delay characteristic in a second NW section including at least a part of a path excluding the second (R)AN in the second communication path.

16. A communication system comprising:
a first terminal device;
an application device that communicates with the first terminal device;
a base station that transmits a transmission signal to the first terminal device and/or the application device; and
an information processing device including a control unit that adds an additional delay to the transmission signal according to a first difference between a first RAN delay characteristic and a second RAN delay characteristic and/or a second difference between a first NW delay characteristic and a second NW delay characteristic, wherein
the first RAN delay characteristic is a delay characteristic in a first RAN section including at least a first (R)AN in a first communication path including a first terminal device, the first (R)AN, a first CN, and the application device,
the second RAN delay characteristic is a delay characteristic in a second RAN section including at least a second (R)AN in a second communication path including a second terminal device, the second (R)AN, a second CN, and the application device,
the first NW delay characteristic is a delay characteristic in a first NW section including at least a part of a path excluding the first (R)AN in the first communication path, and
the second NW delay characteristic is a delay characteristic in a second NW section including at least a part of a path excluding the second (R)AN in the second communication path.

17. An information processing method comprising:
adding an additional delay to a transmission signal to be transmitted to a first terminal device and/or an application device according to a first difference between a first RAN delay characteristic and a second RAN delay characteristic and/or a second difference between a first NW delay characteristic and a second NW delay characteristic, wherein
the first RAN delay characteristic is a delay characteristic in a first RAN section including at least a first (R)AN in a first communication path including the first terminal device, the first (R)AN,
a first CN, and the application device,
the second RAN delay characteristic is a delay characteristic in a second RAN section including at least a second (R)AN in a second communication path including a second terminal device, the second (R)AN, a second CN, and the application device,
the first NW delay characteristic is a delay characteristic in a first NW section including at least a part of a path excluding the first (R)AN in the first communication path, and
the second NW delay characteristic is a delay characteristic in a second NW section including at least a part of a path excluding the second (R)AN in the second communication path.

18. A communication method comprising:
receiving, by a terminal device, a transmission signal to which an additional delay is added according to a first difference between a first RAN delay characteristic and a second RAN delay characteristic and/or a second difference between a first NW delay characteristic and a second NW delay characteristic, wherein
the first RAN delay characteristic is a delay characteristic in a first RAN section including at least a first (R)AN in a first communication path including the terminal device, the first (R)AN, a first CN, and an application device,
the second RAN delay characteristic is a delay characteristic in a second RAN section including at least a second (R)AN in a second communication path including a second terminal device, the second (R)AN, a second CN, and the application device,
the first NW delay characteristic is a delay characteristic in a first NW section including at least a part of a path excluding the first (R)AN in the first communication path, and
the second NW delay characteristic is a delay characteristic in a second NW section including at least a part of a path excluding the second (R)AN in the second communication path.

19. A communication method comprising:
transmitting a transmission signal to which an additional delay according to a first difference between a first RAN delay characteristic and a second RAN delay characteristic and/or a second difference between a first NW delay characteristic and a second NW delay characteristic is added to a first terminal device and/or an application device, wherein
the first RAN delay characteristic is a delay characteristic in a first RAN section including at least a first (R)AN in a first communication path including the first terminal device, the first (R)AN, a first CN, and the application device,
the second RAN delay characteristic is a delay characteristic in a second RAN section including at least a second (R)AN in a second communication path including a second terminal device, the second (R)AN, a second CN, and the application device,
the first NW delay characteristic is a delay characteristic in a first NW section including at least a part of a path excluding the first (R)AN in the first communication path, and
the second NW delay characteristic is a delay characteristic in a second NW section including at least a part of a path excluding the second (R)AN in the second communication path.

20. A communication method in a communication system including a first terminal device, an application device that communicates with the first terminal device, a base station that transmits a transmission signal to the first terminal device and/or the application device, and an information processing device, the communication method comprising:
by the information processing device,
adding an additional delay to the transmission signal according to a first difference between a first RAN delay characteristic and a second RAN delay characteristic and/or a second difference between a first NW delay characteristic and a second NW delay characteristic, wherein
the first RAN delay characteristic is a delay characteristic in a first RAN section including at least a first (R)AN in a first communication path including a first terminal device, the first (R)AN, a first CN, and the application device,
the second RAN delay characteristic is a delay characteristic in a second RAN section including at least a second (R)AN in a second communication path including a second terminal device, the second (R)AN, a second CN, and the application device,
the first NW delay characteristic is a delay characteristic in a first NW section including at least a part of a path excluding the first (R)AN in the first communication path, and
the second NW delay characteristic is a delay characteristic in a second NW section including at least a part of a path excluding the second (R)AN in the second communication path.
